# EUROPEAN PATENT SPECIFICATION

(11) **EP 1 203 057 B1**
(45) Date of publication and mention of the grant of the patent: **02.02.2005**
(21) Application number: 00934949.9
(22) Date of filing: 09.06.2000
(51) Int. Cl.: C09D 5/16, C09D 157/06

(54) **SELF-POLISHING MARINE ANTIFOULING PAINT COMPOSITION CONTAINING BLOCKED ACID FUNCTIONAL CO-POLYMERS AND FIBRES**
SELBSTPOLIERENDE ANWUCHSVERHINDERNDE ANSTRICHFARBE FÜR WASSERFAHRZEUGE-ENTHALTEND BLOCKIERTE SÄUREFUNKTIONELLE COPOLYMERE UND FASERN
COMPOSITION DE PEINTURE ANTISALISSURES MARINE AUTOPOLISSABLE CONTENANT DES COPOLYMERES A FONCTION ACIDE SEQUENCES ET DES FIBRES

(30) Priority: 11.06.1999 DK 83299
(43) Date of publication of application: 08.05.2002
(73) Proprietor: HEMPEL A/S, 2800 Kongens Lyngby (DK)
(72) Inventor: CODOLAR, Santiago Arias, E-08015 Barcelona (ES); ELBRO, Helle, Simon, DK-2860 Soborg (DK); PEDERSEN, Michael, Stanley, DK-2000 Frederiksberg (DK); GLADWIN, Tim, Scott, DK-1904 Frederiksberg C (DK); BUCHWALD, Frants, DK-4583 Sjaellands Odde (DK)
(86) International application number: PCT/DK2000/000314
(87) International publication number: WO 2000/077103

(56) References cited:
- EP-A2- 0 232 006
- WO-A1-91/09915
- WO-A2-96/15198
- GB-A- 2 084 167

## Description

### FIELD OF THE INVENTION

The present invention relates to antifouling paints having the ability to prevent unwanted fouling organisms from attaching and growing on immersed structures that come in contact with water, especially sea water. The present invention provides improved properties of such antifouling paint by incorporation of specific types of fibres.

### BACKGROUND OF THE INVENTION

On underwater structures and on ship's hulls which are exposed to sea and/or fresh water, attachment and growth of marine organisms cause severe economic losses because of the increased friction (and therefore increased consumption of fuel), or increased resistance to waves or currents (for static structures such as off-shore rigs), and because of decreased possible operation time.

An antifouling paint technology which has been investigated over the last decades, is the use of self-polishing antifouling paint compositions in which the polymer of the binder system is a trialkyltin derivative of a polymer containing carboxylic acid groups in the monomer segments, the trialkyltin groups being situated on the carboxylic acid groups. However, the increasing problem of pollution with tin compounds in, *e.g.*, harbours has led to intensive research efforts to provide tin-free self-polishing antifouling paints.

The search for binder systems for tin-free self-polishing antifouling paints, on the one hand having inherent self-polishing properties and exhibiting good capabilities for incorporation of biologically active agents, and on the other hand being able to convey a good mechanical strength of the paint film, has so far been a difficult task.

One way of obtaining binder systems for antifouling paints, such as for tin-free self-polishing antifouling paints, is to employ large amounts of rosin or rosin equivalents as part of the binder system. However, incorporation of large amounts of rosin and rosin equivalent leads to major mechanical weaknesses which were believed to be prohibitive for full exploitation of rosin-based paints. However, improvements to this technology have, e.g., been described in the applicant's previous applications WO 96/15198 and WO 97/44401. These applications describe solutions to the problems relating to the prohibitive inherent mechanical deficiencies of particularly rosin-containing paints. The technology disclosed in the applicant's previous applications illustrates a way of counteracting the mechanical deficiencies of inherently weak paint compositions which would otherwise be unsuitable for high performance utility.

Another interesting (tin-free) paint technology which has been pursued with a certain success is self-polishing antifouling paint based on binder polymer having pendant acid functional groups, e.g. sulphonic acid groups, blocked by nitrogen compounds. This technology is *inter alia* described in EP 529 693 B1, EP 0 506 782 B1, EP 0 232 006 B1, Unexamined Japanese Patent Nos. 6-73312, 6-72807, 6-122842, 6-157942, 9-77825, and 10-182310. The polymers as such are *inter alia* known from GB 1 482 252

Although some compositions based on the above patents and patent applications appears to be possible alternatives to tin-based paint compositions , it is noted that the integrity of paints based on blocked carboxylate or sulphonate binder polymers appears to be affected after use for a longer period of time, especially at the water line of a ship where cycles of sea-water exposure and sun light will induce a significant mechanical stress often resulting in cracking and flake formation.

Even though the mechanical properties of the known blocked sulphonate polymer-based paints appear to be fully sufficient right after application to the surface of, e.g., a ship (and for a shorter period thereafter), the long term exposure under operation of a vessel coated with the paint, in particular exposure to alternate cycles of sea-water and sunlight, may, as it has been illustrated in the examples disclosed herein, induce certain deficiencies. This problem is particularly relevant for self-polishing paint where a certain degree of water absorption occurs when a coat of the paint'is submerged in sea-water. Absorption of water causes the paint film to become slightly swollen and when the paint subsequently is dried out, the paint film will again reduce in thickness.

### SUMMARY OF THE INVENTION

Thus, underlying problem for the present invention is to provide alternative self-polishing antifouling paint compositions which preserves the long term integrity after application to a surface intended for exposure to marine environments.

Thus, the present invention relates to a self polishing marine antifouling paint composition comprising
i) at least one binder co-polymer containing repeat units comprising acid-functional groups, said acid-functional groups being blocked by a blocking group, X, selected from the group consisting of monoamine groups, diamine groups, polyamine groups and quaternary ammonium groups; and
ii) fibres.

### DETAILED DESCRIPTION OF THE INVENTION

It has now been found that self-potishing antifouling paints comprising polymers of the type specified herein and which seem to possess certain apparent deficiencies under conditions corresponding to the long term exposure to weathering, i.e. the conditions described in the "Blister Box Test" and the "Rotor Test" herein can be improved by the incorporation of fibres.

The "Blister Box Test" is performed in order to simulate the waterline area where the paint system is exposed to repeated wet/dry cycles. The test period of 8 week will often correspond to the expected operation time for a vessel. However due to the increasing demands for even longer operation periods before repainting/recoating, an extended "Blister Box Test" run for 16 weeks may also be relevant when evaluation a paint in relation to the highest expectations. If the ship is fully loaded the majority of the antifouling paint coat is immersed in water. On the other hand, when the ship is only partly loaded a significant area of the antifouling paint coat is exposed to air/sun. Due to the fact that an antifouling paint always absorbs some amount of water, the paint increases in volume when immersed in water (due to water uptake) and decreases in volume (due to water release) when exposed to air. Repeated cycles of increase/decrease in paint volume implies that the paint is exposed to a very hard mechanical stress.

The "Rotor Test" is performed in order to simulated the long term operation of a vessel carrying the paint. The periods of 6, 8, 10 and 12 months correspond to various stages of the expected operation of a vessel.

In the present context, the term "C₁₋₁₈-alkyl" is intended to cover straight, branched or cyclic hydrocarbon groups haying from 1 to 18 carbon atoms, such as methyl, ethyl, propyl, *iso*-propyl, n-butyl, *iso*-butyl, *sec*-butyl, *tert*-butyl, pentyl, hexyl, cyclohexyl, heptyl, octyl, nonyl, decyl, undecyl, dodecyl, tetradecyl, hexadecyl and octadecyl. Other longer or shorter alkyl groups such as C₁₋₂₄-alkyl and C₁₋₁₀-alkyl have similar meanings corresponding to the respective higher or lower number of carbon atoms. Alkoxy means alkyl-oxy.

When used herein, the term "C₆₋₁₂-aryl" covers aromatic carbocyclic ring or ring system having from 6 to 12 carbon atoms, such as phenyl, naphthyl, biphenyl, xylyl, 1,4-dihydronaphthyl and 1,2,3,4-tetrahydronaphthyl.

In the present context, the term "C₂₋₁₈-alkenyl" covers linear, branched or cyclic hydrocarbon groups having 2 to 18 carbon atoms and comprising one, two or three double bonds. Examples of alkenyl groups are vinyl, allyl, butenyl, pentenyl, hexenyl, heptenyl, octenyl, heptadecanyl and cyclohexenyl. Other longer or shorter alkenyl groups such as C₁₋₂₄-alkenyl and C₁₋₁₀-alkenyl have similar meanings corresponding to the respective higher or lower number of carbon atoms.

The term "optionally substituted" herein, means that the alkyl group, the aryl group or the alkenyl group in question may be optionally substituted one or several times, preferably 1-5 times, with substituents selected from the group consisting of hydroxy (which when bound to an unsaturated carbon atom may be present in the tautomeric keto form), C₁₋₂₀-alkyl, hydroxy(C₁₋₁₀-alkyl), C₁₋₁₀-alkylcarbonyloxy, carboxy, C₁₋₁₀-alkoxycarbonyl, C₁₋₁₀-alkoxy, C₂₋₁₀-alkenyloxy, oxo (forming a keto or aldehyde functionality), C₁₋₁₀-alkylcarbonyl, aryl, amino, mono-, di- and tri(C₁₋₁₀-alkyl)amino, carbamoyl, mono-, di- and tri(C₁₋₁₀-alkyl)-aminocarbonyl, amino-C₁₋₁₀-alkyl-aminocarbonyl, mono-, di- and tri(C₁₋₁₀-alkyl)amino-C₁₋₁₀-alkylaminocarbonyl, C₁₋₁₀-alkylcarbonylamino, cyano, guanidino, carbamido, C₁₋₁₀-alkanoyloxy, sulphono, C₁₋₁₀-alkylsulphonyloxy, nitro, sulphanyl, C₁₋₁₀-alkylthio and halogen.

As mentioned above, the blocking group may be selected from monoamines, diamines, polyamines and quaternary ammonium groups. It should be understood that each of the amino functionalities of any monoamines, diamines, polyamines may be either primary amines, secondary amines or tertiary amines. For the quarternary ammonium groups, it should be understood - as is commonly understood - that the nitrogen atom thereof is tetrasubstituted thereby leaving the nitrogen atom. as positively charged. The distinction between monoamines, diamines, polyamines and quaternary ammonium groups should in no way be interpreted in the way that only the quarternary ammonium group can be positively charged. On the contrary, the monoamines, diamines, and polyamines are also charged when forming salts with the acid functionalities of co-polymers used within the invention. Thus, it should be understood that when the terms "monoamines", "diamines" and "polyamines" are used, these constituents are present in their ammonium form when present as the group X.

Examples of monoamines are those of the general formula II 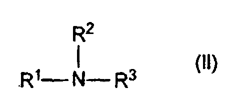 wherein R¹, R² and R³ are each independently selected from the group consisting of hydrogen, C₁₋₂₄-alkyl, C₆₋₁₂-aryl and monovalent hydrocarbon groups derived from a diterpene.

Illustrative examples of aliphatic amines are primary amines: cyclohexylamine, hexylamine, octylamine, decylamine, dodecylamine, tetradecylamine, laurylamine, hexadecylamine, octadecylamine, stearylamine, oleylamine, mixtures of amines derived from aliphatic groups present in natural fats and oils such as beef-tallow amine or hydrogenated beef-tallow amine or coconut amine; secondary amines: di(dodecyl)amine, di(tetradecyl)amine, di(hexadecyl)amine, di(octadecyl)amine, di(oleyl)amine, di(beef tallow alkyl)amine, di(coconut alkyl)amine, dodecyl octadecylamine, dodecyl monomethylamine, dodecyl ethylamine, hexadecyl butylamine, hexadecyl monomethylamine, octadecyl monomethylamine, beef-tallow alkyl monomethylamine, hydrogenated beef-tallow alkyl monomethylamine, coconut alkyl monomethylamine; tertiary amines: dodecyl dimethylamine, hexadecyl dimethylamine, octadecyl dimethylamine, coconut alkyl dimethylamine, beef-tallow alkyl dimethylamine, hydrogenated beef-tallow alkyl dimethylamine, didodecyl monomethylamine, dioctadecyl monomethylamine, dodecyl hexadecyl monomethylamine, beef-tallow alkyl diethylamine, coconut alkyl dihexylamine.

Illustrative examples of aryl amines are aniline, toluidine, xylidine, p-n-hexyl aniline, p-n-octyl aniline, p-nonyl aniline, p-dodecyl aniline, N-methyl aniline, N-methyl toluidine, N-methyl xylidine, N-methyl p-n-hexyl aniline, N-methyl p-n-octyl aniline, N-methyl p-nonyl aniline, N-methyl p-dodecyl aniline, N,N-dimethyl aniline, N,N-dimethyl toluidine, N,N-dimethyl xylidine, N,N-dimethyl p-n-hexyl aniline, N,N-dimethyl p-n-octyl aniline, N,N-dimethyl p-nonyl aniline, N,N-dimethyl p-dodecyl aniline.

Alternative monoamines which can be used as the blocking group are aralkylamines such as those sold commercially as "phenalkamines".

A particular group of monoamines are those corresponding to the formula II where R₁ is a monovalent hydrocarbon group derived from a diterpene and R₂ and R₃ are each independently selected from the group consisting of hydrogen, C₁₋₁₈-alkyl and C₆₋₁₂-aryl. The amine of formula (II) where R₁ is a monovalent hydrocarbon group derived from a diterpene can be used as a mixture with one or more other high molecular weight amines. It can for example be used with a long-chain (12 to 20 carbon atoms) aliphatic amine such as dodecyl amine, tetradecyl amine, hexadecyl amine, octadecyl amine or oleyl amine, or a mixture of such amines, for example those sold as tallow amine, hydrogenated tallow amine, coconut amine, or N-methyl coconut amine. Such a mixture of amines preferably contains at least 50% by weight of the amine of formula (II) where R₁ is a monovalent hydrocarbon group derived from a diterpene, for example 60-90% by weight.

The blocking group X may also be a diamine group or a Jeffamine®, e.g. of the general formula III 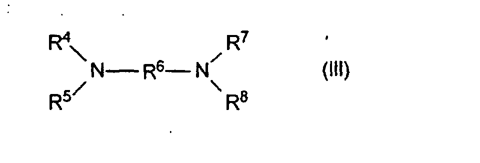 wherein R⁴, R⁵, R⁷ and R⁸ are each independently selected from the group consisting of hydrogen, optionally substituted C₁₋₂₄-alkyl, optionally substituted C₆₋₁₂-aryl and monovalent hydrocarbon groups derived from a diterpene, and R⁶ represents either a direct covalent link between the two nitrogen atoms or, alternatively, R⁶ is selected from the group consisting of C₁₋₁₈-alkylene, C₆₋₁₂ arylene, C₂₋₁₈-alkenylene, polyoxyalkylene, -CH₂-O-CH₂- and -C(=O)-.

Examples of diamines are N-mono substituted ethylenediamines such as dodecyl ethylenediamine, hexadecyl ethylenediamine, octadecyl ethylenediamine, oleyl ethylenediamine, beef-tallow alkyl ethylenediamine, N-mono substituted trimethylenediamines such as dodecyl trimethylenediamine, hexadecyl trimethylenediamine, octadecyl trimethylenediamine, oleyl trimethylenediamine, coconut alkyl trimethylenediamine, beef-tallow alkyl trimethylenediamine, hydrogenated beef-tallow alkyl trimethylenediamine.

Other examples are the diamines of the formula R⁹[NR¹⁰(CH₂)ₐ]_{b}NH₂, where R⁹ is a saturated or unsaturated C₁₋₂₄-alkoxy-C₁₋₂₄-alkyl, C₁₋₂₄-alkyl, C₁₋₂₄-alkenyl, hydroxy-C₁₋₂₄-alkyl e.g. β-hydroxy-C₁₋₂₄-alkyl; R¹⁰ is selected from hydrogen and (CH₂)ₐ-NH₂; a is 1-6 and b is 2-4. Examples of such diamines are N-octyl-N,N-bis(3-aminopropyl)amine, N-decyl-N,N-bis(3-aminopropyl)amine, N-dodecyi-N,N-bis(3-aminopropyl)amine, N-tetradecyl-N,N-bis(3-aminopropyl)amine, N-hexadecyl-N,N-bis(3-aminopropyl)amine, N-octadecyl-N,N-bis(3-aminopropyl)amine, N-octenyl-N,N-bis(3-aminopropyl)amine, N-myristoyl-N,N-bis(3-aminopropyl)amine, N-oleyl-N,N-bis(3-aminopropyl)amine, N-linoleyl-N,N-bis(3-aminopropyl)amine, N-(coconut alkyl)-N,N-bis(3-aminopropyl)amine, N-(beef-tallow alkyl)-N,N-bis(3-aminopropyl)amine, N-(hydrogenated beef-tallow alkyl)-N,N-bis(3-aminopropyl)-amine, N-(soybean alkyl)-N,N-bis(3-aminopropyl)amine, N-(coconut alkyl)-N,N-bis(3-aminopropyi)amine, N-(oleo alkyl)-N,N-bis(3-aminopropyl)amine, N-octyl-dipropylene triamine, N-decyl-dipropylene triamine, N-dodecyl-dipropylene triamine, N-tetradecyl-dipropylene triamine, N-hexadecyl-dipropylene triamine, N-octadecyl-dipropylene triamine, N-octenyl-dipropylene triamine, N-myristoyl-dipropylene triamine, N-oleyl-dipropylene triamine, N-linoleyl-dipropylene triamine, N-(coconut alkyl)-dipropylene triamine, N-(beef-tallow alkyl)-dipropylene triamine, N-(hydrogenated beef-tallow alkyl)-dipropylene triamine, N-(sbybean alkyl)-dipropylene triamine, N-(coconut alkyl)-dipropylene triamine, N-(oleo alkyl)-dipropylene triamine, N-octyl-tripropylene tetraamine, N-decyl-tripropylene tetraamine, N-dodecyl-tripropylene tetraamine, N-tetradecyl-tripropylene tetraamine, N-hexadecyl-tripropylene tetraamine, N-octadecyl-tripropylene tetraamine, N-octenyl-tripropylene tetraamine, N-myristoyl-tripropylene tetraamine, N-oleyl-tripropylene tetraamine, N-linoleyl-tripropylene tetraamine, N-(coconut alkyl)-tripropylene tetraamine, N-(beef-tallow alkyl)-tripropylene tetraamine, N-(hydrogenated beef-tallow alkyl)-tripropylene tetraamine, N-(soybean alkyl)-tripropylene tetraamine, N-(coconut alkyl)-tripropylene tetraamine, N-(oleo alkyl)-tripropylene tetraamine, N-octyl-tetrapropylene pentaamine, N-decyl-tetrapropylene pentaamine, N-dodecyl-tetrapropylene pentaamine, N-tetradecyltetrapropytene pentaamine, N-hexadecyt-tetrapropytene pentaamine, N-octadecyl-tetrapropylene pentaamine, N-octenyl-tetrapropylene pentaamine, N-myristoyl-tetrapropylene pentaamine, N-oleyl-tetrapropylerie pentaamine, N-linoleyl-tetrapropylene pentaamine, N-(coconut alkyl)-tetrapropylene pentaamine, N-(beef-tallow alkyl)-tetrapropylene pentaamine, N-(hydrogenated beef-tallow alkyl)-tetrapropylene pentaamine, N-(soybean alkyl)-tetrapropylene pentaamine, N-(coconut alkyl)-tetrapropylene pentaamine, N-(oleo alkyl)-tetrapropylene pentaamine, N-(β-hydroxyoctyl)-dipropylene triamine, N-(β-hydroxy decyl)-dipropylene triamine, N-(β-hydroxy dodecyl)-dipropylene triamine, N-(β-hydroxy tetradecyl)-dipropylene triamine, N-(β-hydroxy hexadecyl)-dipropylene triamine, N-(β-hydroxy octadecyl)-dipropylene triamine, N-(β-hydroxy octyl)-tripropylene tetraamine, N-(β-hydroxy decyl)-tripropylene tetraamine, N-(β-hydroxy dodecyl)-tripropylene tetraamine, N-(β-hydroxy tetradecyl)-tripropylene tetraamine, N-(β-hydroxy hexadecyl)-tripropylene tetraamine, N-(β-hydroxy octadecyl)-tripropylene tetraamine, N-(β-hydroxy octyl)-tetrapropylene pentaamine, N-(β-hydroxy decyl)-tetrapropylene pentaamine, N-(β-hydroxy dodecyl)-tetrapropylene pentaamine, N-(β-hydroxy tetradecyl)-tetrapropylene pentaamine, N-(β-hydroxy hexadecyl)-tetrapropylene pentaamine, N-(β-hydroxy octadecyl)-tetrapropylene pentaamine,

Still other examples of diamines are *o*-phenylenediamine, *m*-phenylenediamine and *p*-phenylenediamine (i.e. R⁴, R⁵, R⁷ and R⁸ in the above formula III are hydrogen, and R⁶ is phenyl).

Still other examples of diamines which are contemplated to be particular useful for the purposes described herein, are poly(oxypropylene)diamine with the general formula IIIa

H₂N-CH(CH₃)-CH₂-(O-CH(CH₃)-CH₂)ᵣ-OCH₂-CH(CH₃)-NH₂ (IIIa)

wherein r is primarily 1 and 2, such as the commercially available product Ancamine 1784 ex Air Products PLC (U.K.), and *m*-xylenediamine, isophoronediamine, 1,6-diamine-1,1-dimethyl-hexane, 1,6-diamine-1-methyl-3,3-dimethyl-hexane, and N-cyanoethylated diamines, such as the commercially available product Vestamin V214 ex Creanova spezial Chemie Gmbh (Germany).

In addition to the above-mentioned chemistries discussed in connection with the blocking group X, it is contemplated that also polyamines (i.e. tri- or higher amines (such as tetraamines, pentaamines, hexaamines)) may prove useful as blocking groups.

It is contemplated that Jeffamines®, which are aminated polyalkoxyethers (registered trade mark of Huntsman Chem. Corp., USA), are suitable acid-functional blocking groups. Jeffamines® are monoamines, diamines, triamines and polyamines (and, in some cases, mixtures thereof) and specific examples of various Jeffamines® are mentioned in WO 96/14362 which is hereby incorporated by reference. Specific examples of Jeffamines® include, for example, Jeffamine D-400 (aminated polyoxypropylene glycols of average molecular weight 400 ex Huntsman Chem. Corp., USA), Jeffamine D-2000 (aminated polyoxypropylene glycols of average molecular weight 2000 ex Huntsman Chem. Corp., USA), Jeffamine ED-600 (poly(oxypropylene-co-oxyethylene) of average molecular weight 600 ex Huntsman Chem. Corp., USA) and Jeffamine T-403 (tri-functional polyoxypropylene glycols of average molecular weight 400 ex Huntsman Chem. Corp., USA).

Jeffamines® are hydrophilic and it is believed that they may improve the polishing properties. However, also less hydrophilic monoamines, diamines, and polyamines may be of interest.

The quaternary ammonium group can be a tetra-alkyl ammonium group such as tetra-methyl ammonium, tetra-ethyl ammonium or triethyl-methyl ammonium or it can contain one or more cycloalkyl, aryl or aralkyl groups. More generally, the organic groups in the quaternary ammonium moiety may be saturated or unsaturated, aliphatic, cycloaliphatic, aromatic, aliphatic-aromatic or heterocyclic. As examples hereof, it is contemplated that any of the monoamines, diamines and polyamines described above can be turned into quaternary ammonium groups by N-alkylation, e.g. N-methylation.

In one embodiment, the quaternary ammonium moiety preferably contains at least one organic group containing at least 3 carbon atoms, advantageously at least 8 carbon atoms and preferably from 8 to 25 carbon atoms (for example 8 to 20 carbon atoms), and more especially at least 12 carbon atoms, such as from 12 to 25 carbon atoms.

Examples of such quaternary ammonium groups are dodecyl trimethyl ammonium, hexadecyl trimethyl ammonium, octadecyl trimethyl ammonium, oleyl trimethyl ammonium, benzyl dodecyl dimethyl ammonium, dodecyl dimethyl octyl ammonium or trioctyl methyl ammonium. Mixtures of quaternary ammonium groups can be used; for example an organic group having 8 to 24 carbon atoms can be derived from a naturally occurring
material such as a natural fatty material. Examples of such mixed quaternary ammonium groups are trimethyl hydrogenated tallow ammonium, dimethyl di(hydrogenated tallow) ammonium or trimethyl coconut ammonium as well as similar examples derived from the lists of amines above. Advantageously, the total number of carbon atoms in the quaternary ammonium moiety is at least 8, preferably at least 12, such as from 12 to 24.

The quaternary group can alternatively be derived from rosin, for example it can be N,N,N-trimethyl derivative of the amine sold commercially as "Rosin Amine D", being mainly dehydroabietyl trimethyl ammonium.

As indicated further below, it is presently preferred that the blocking group "X" (i.e. the monoamines, the diamines, the polyamines and the quaternary ammonium groups). possess a low toxicity in the marine environment. Accordingly, blocking groups which are particular preferred are those which
i) when tested according to the OECD guideline for the testing of chemicals No. 212: "Fish, short term toxicity test on the embryo and sac-fry stages", have a LC₅₀-value (for fish) of at least 5 mg/l, in particular at least 10 mg/l, such as at least 50 mg/l, e.g. at least 100 mg/l; or
ii) when tested according to the OECD guideline for the testing of chemicals No. 202: "Daphnia sp., Acute immobilisation Test and Reproduction Test", have an EC₅₀-value of at least 5 mg/l, in particular at least 10 mg/l, such as at least 50 mg/l, e.g. at least 100 mg/l; or
iii) when tested according to the OECD guideline for the testing of chemicals No. 201: "Alga, Growth Inhibition Test", have an IC₅₀-value of at least 5 mg/l, in particular at least 10 mgll, such as at least 50 mg/l, e.g. at least 100 mg/l.

With respect to the above-mentioned tests, the following abbreviations have been used: LC: Lethal concentration; EC: Effect concentration; and IC: Inhibition concentration.

With respect to physico-chemical properties of the employed blocking groups described herein, it is presently believed that those blocking groups which are of particular interest are those blocking having a Log(K_{ow}) value of at the most 3, where K_{ow} is the octanol/water partition coefficient. The Log(K_{ow})-value may be determined as described in Hansch and Elkins: Partition Coefficients and their uses, Chem. Rev. 71:525-616, 1971.

The amine salt formed from the acid-functional polymer is substantially insoluble in water and controls the rate of dissolution of the acid-functional co-polymer in seawater. The amine salt gradually dissociates on prolonged immersion in seawater, for example on a ship's hull in service. The amine is gradually released into the seawater. The remaining acid-functional polymer is gradually converted to free acid or anion form and becomes seawater-soluble and is gradually swept from the hull of the ship. The paints containing the amine salts of an acid-functional polymer thus act as self-polishing coatings.

The acid functional groups are preferably carboxylic acid groups or sulphonic acid groups. Also possible are binder systems where the polymer or polymers include a mixture carboxylic acid groups and sulphonic acid groups, either within separate polymer chains or even within the same polymer chain.

In one interesting embodiment of the invention, the acid-functional group in the repeat is a sulphonic acid group and the repeat unit has the general formula I below: 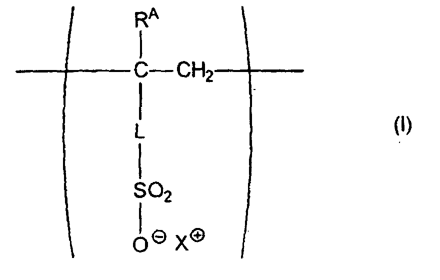 wherein R^{A} is hydrogen or methyl, X is as defined above and L is a direct link (i.e. a direct covalent bond) or a group selected from the group consisting of -(alkylene)-, -CO-O-(alkylene)-, -CO-NH-(alkylene)-, -NH-CO-(alkylene)-, -(arylene)-, -(alkylene)-(arylene), -(arylene)-(alkylene)-, -(alkylene)-O-(alkylene)-, -(alkylene)-O-(arylene)-, -(arylene)-O-(arylene)-, -(arylene)-O-(alkylene)-, alkyleneoxy-, and polyalkyleneoxy-groups.

In the above-mentioned possibilities for L which also applies for other types of acid functionalities, the -(alkylene)- groups can provide a linking chain of 1 or more carbon atoms, e.g. 1 to 20 carbon atoms (when more than 20 carbon atoms exist between the pendant sulphonate group and the polymer backbone, the contribution to the erodibility of the polymer by this group might become rather weak and so might not be very useful). Hence the preferred -(alkylene)- groups can be represented by -(CR_{b}R_{c})ₙ- where n is an integer of 1 to 20 and R_{b} and R_{c} (which may be the same or different in each or, when n is 2 or more, in different -CR_{b}R_{c}- groups of the -(alkylene)- chain) are selected from H and alkyl or substituted alkyl groups (more preferably H or lower alkyl of 1 to 5 carbon atoms, in particular methyl). Examples of such preferred alkylene groups would e.g. be -(CH₂)ₙ- where n is e.g. 1 to 20. Substantially the same considerations apply to the more hydrophilic alkyleneoxy or polyalkyleneoxy groups, with preferred groups of this type being represented by -(CHR_{d}CHRₑO)ₘ- where m is e.g. 1 to 15 and R_{d} and Rₑ (which may be the same or different in each -CHR_{d}CHRₑO- unit) are selected from H and alkyl or substituted alkyl (more preferably, H or lower alkyl of 1 to 5 carbon atoms, in particular methyl). Examples of such preferred alkyleneoxy groups would be -(CH₂CH₂O)ₘ- and -(CH₂CH(CH₃)O)ₘ- where m is, e.g. 1 to 15. The -(arylene)- groups in the above mentioned possibilities for L can be represented by divalent aromatic radicals comprising a single or linked benzene ring system or conjugated benzene ring system (although conceivably heteroaromatic rings might also be utilised).

In one preferred embodiment of the invention the -(arylene)- group is a para phenylene (ortho or meta phenylene can also be used). The use of *p*-phenylene for L is particularly favoured since starting monomers (for making the repeat units) containing it are readily prepared.

As other particularly interesting possibilities for the group L should be mentioned, -CO-NH-C(CH₃)₂-CH₂-, -CH₂-CH₂-, -CH₂- and even a direct covalent link.

In the above-mentioned embodiment of the invention, X may be selected from the group consisting of monoamine groups, diamine groups, polyamine groups and quaternary ammonium groups (*vide supra*) and the co-polymer thus formed preferably comprises from 1-50 mol% of the repeat units; such as from 3-40 mol% of the repeat units, in particular from 5-20 mol% of the repeat unit.

The co-polymer to be used in the self-polishing paint composition according to the invention may contain alkylene oxide and/or poly(alkylene oxide)-containing repeat units such as described in EP 0 232 006 B1, which is hereby incorporated by reference.

Furthermore, it should be noted that although not presently preferred the blocking group may also be an ester function such as described in EP 0 232 006 B1.

In another interesting embodiment of the invention, the acid-functional group in the repeat unit is a sulphonic acid group and the repeat unit has the general formula I below: 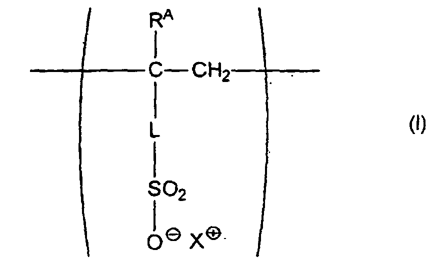 wherein R^{A} is hydrogen or methyl, X is a quaternary ammonium group and L is a direct link (i.e. a direct covalent bond) or a group selected from the group consisting of -CO-NH-C(CH₃)₂-CH₂-, -CH₂-CH₂-, and -CH₂-.

Accordingly, specific examples of monomers which in this particular embodiment of the invention can be used in preparing a sulphonic acid functional co-polymer (having the repeat unit of the general formula I above) are styrene sulphonic acid and, preferably, aliphatic sulphonic acid monomers such as 2-acrylamido-2-methyl-propane sulphonic acid (AMPS), vinyl sulphonic acid, propenesulphonic acid and 2-sulphoethyl methacrylate. Particular mention may be made of non-aromatic sulphonic acid monomers, and of aromatic sulphonic acid monomers other than styrene sulphonic acid.

Preferably, the equivalent weight of the co-polymer calculated as free sulphonic acid groups is in the range of 600-4000, in particular in the range of 900-2000.

The co-polymer generally contains 0.1-30 such as 3-30% by weight of the sulphonic acid monomer (more especially at least 2 such at least 5% by weight) to give the preferred equivalent weight of 600-4000, advantageously 10-20% by weight sulphonic acid monomer to give an equivalent weight of 900-2000.

Advantageously, the proportion of quaternary ammonium sulphonate monomer in the binder co-polymer is in the range of 1-30 mol% such as 3-30 mol%, e.g., 5-30 mol%.

The sulphonate acid monomer is advantageously co-polymerised with an ethylenically unsaturated co-monomer, which may be an aliphatic co-monomer, for example an acrylic ester or amide such as methyl acrylate, methyl methacrylate, ethyl acrylate, butyl acrylate, isobutyl acrylate or 2-ethylhexyl methacrylate, methoxy ethyl acrylate, methoxy ethyl methacrylate acrylonitrile, vinyl acetate, vinyl butyrate or vinyl chloride. Alternatively, styrene or vinyl pyridine may be used as a co-monomer. Two or more co-monomers may be used as desired. For example, a sulphonic acid monomer may be co-polymerised with methyl methacrylate and butyl, acrylate, or with ethyl methacrylate and methoxyethyl acrylate.

If the co-polymer contains a relatively low proportion of sulphonic acid groups (for example, 5 mol% or less) it may also contain carboxylic acid groups derived for example from acrylic or methacrylic acid, or groups which are hydrolysed by seawater to carboxylic acid or salt groups.

Polymerisation of the sulphonic acid is preferably carried out in a polar organic solvent using a free radical initiator, for example an azo compound such as azobisisobutyronitrile or a peroxide such as benzoyl peroxide. The polar organic solvent can, for example, be a ketone such as methyl isobutyl ketone, methyl ethyl ketone or methyl isoamyl ketone, an ester such as butyl acetate, methoxy-propyl acetate or ethoxyethyl acetate, an alcohol such as butanol or an ether alcohol such as butoxyethanol. Mixtures of a polar organic solvent with a hydrocarbon, for example an aromatic hydrocarbon such as xylene, can be used. The sulphonic acid can be polymerised in free acid or salt form.

The weight average molecular weight of the sulphonic acid co-polymer is generally in the range of 1,000-200,000, such as at least 1500, and preferably in the range of 5,000-60,000.

Although a number of different methods for determining the weight average molecular weight of the polymer in question will be known to the person skilled in the art, it is preferred that the weight average molecular weight is determined in accordance with the GPC-method described at page 34 in WO 97/44401.

In addition to the structure of the repeat unit having the general formula I (see above) it is contemplated that also repeat units having the general formula Ia (see below) may be useful for the purposes described herein. 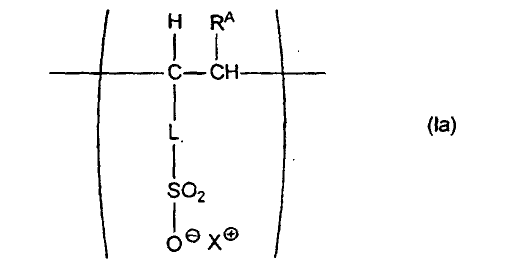 wherein R^{A}, L and X are as defined previously.

The molecular weight can be controlled by the amount of initiator used and if desired by the use of a chain transfer agent. If the sulphonic monomer has very limited solubility in organic solvents, for example if it is AMPS, polymerisation can be carried out in water, but it is preferred to form a monomeric quaternary ammonium salt and to co-polymerise this in a polar organic solvent. Alternative sulphonic acid polymers are telechelic polymers which can be prepared for example by reacting telechelic amine-functional polymers with an ethylenically unsaturated sulphonic acid such as AMPS by Michael addition.

The quaternary ammonium salt groups can be formed by reaction of a polymer containing sulphonic acid or salt groups with a quaternary ammonium hydroxide or salt such as a carbonate, bicarbonate or halide. For example, an alkali metal salt of a sulphonic acid functional polymer can be reacted with a quaternary ammonium salt formed from a tertiary amine and an alkylating agent such as an alkyl halide, preferably methyl bromide or methyl iodide. The reaction is preferably carried out in a polar organic solvent. Generally, it is preferred to use the same solvent as for polymerisation so that the reaction to form the quaternary ammonium salt can be carried out in a solution of the polymer as formed. The solvent is preferably such that the sulphonic acid polymer salt is soluble but the alkali metal halide formed is insoluble and is precipitated. Alternatively, a sulphonic acid polymer in free acid form can be reacted with a quaternary ammonium hydroxide, carbonate or bicarbonate. The equivalent ratio of sulphonic acid or salt groups to the quaternary ammonium compound is preferably in the range 0.8:1-1.5:1; the reagents are preferably used in a stoichiometric amount or with a small excess of the quaternary ammonium compound.

Where a polymer containing sulphonic acid groups in alkali metal salt form is used, it is preferably prepared by neutralisation of a polymer containing sulphonic acid groups with an alkali metal hydroxide, carbonate or bicarbonate. It can alternatively be prepared by co-polymerisation of a monomeric sulphonic acid salt, for example sodium styrene sulphonate or AMPS sodium salt, with one or more co-monomers selected from those listed above.

A quaternary ammonium sulphonate monomer can be prepared by reaction of a sulphonic acid or salt with a quaternary ammonium hydroxide or salt using the reaction conditions described above for reaction of sulphonic acid or salt polymers. The quaternary ammonium sulphonate monomer is advantageously then co-polymerised with one or more co-monomers selected from those listed above. Generally, it is preferred to use the same solvent for preparation of the quaternary ammonium sulphonate polymer and for the subsequent polymerisation.

Mention may be made of processes in which the quaternary ammonium sulphonate species is formed by a method which enables the co-production of other sulphonate species (for example, tertiary ammonium salts) to be avoided. Examples of such methods include reaction of a metal sulphonate salt with a quaternary ammonium halide; reaction of a sulphonic acid with a quaternary ammonium hydroxide; and reaction of a sulphonate ester with a tertiary amine (see the examples). The sulphonate salt, sulphonic acid or sulphonate ester may be in monomeric form, and may be any such monomer as described herein. Alternatively, the sulphonate salt, sulphonic acid or sulphonate ester may be in polymeric form and may then be derived from any such monomer as aforesaid.

The quaternary ammonium group can be as described above. The polymers containing a relatively long chain quaternary ammonium group have a decreased rate of dissolution in seawater.

In a further interesting embodiment of the invention, the acid-functional group in the repeat unit is carboxylic acid group and the blocking group, X, is preferably a monoamine group of the general formula II (*vide supra*).

Thus, the acid-functional polymer is preferably a carboxylic-acid-functional co-polymer of equivalent weight 240-600. A preferred acid-functional co-polymer is an addition co-polymer of one or more olefinically unsaturated acids or anhydrides, for example acrylic acid, methacrylic acid, maleic acid, maleic anhydride, fumaric acid, itaconic acid or itaconic anhydride, vinyl benzoic acid (for example *p*-vinyl benzoic acid), 3-butenoic acid or beta-carboxy-ethyl acrylate or methacrylate, with at least one olefinically unsaturated co-monomer. Co-polymers of methacrylic acid or acrylic acid are preferred. (The preferred equivalent weight of 240-600 corresponds to an acrylic acid content of 14.3-35.8% by weight and a methacrylic acid content of 16.7-41.7% by weight).

The acid-functional monomer is preferably co-polymerised with one or more co-monomers which are unreactive with acid groups, for example acrylic or methacrylic esters such as methyl acrylate, methyl methacrylate, ethyl acrylate, butyl acrylate, methoxy ethyl methacrylate or 2-ethylhexyl methacrylate, styrene, acrylonitrile, vinyl acetate, vinyl butyrate, vinyl chloride or vinyl pyridine. Terpolymers may be preferred, for example methyl methacrylate or ethyl methacrylate which tend to form a hard film can be used in conjunction with an acrylate such as ethyl acrylate or particularly an alkyl acrylate of 3 to 8 carbon atoms in the alkyl moiety such as butyl acrylate which helps to form a more flexible film. A substituted acrylate ester can be used as one of the co-monomers, for example. Such an acid polymer preferably has a molecular weight of 1,000-100,000. The equivalent weight of the acid polymer (calculated as acid groups) is most preferably 300-440, equivalent to an acrylic acid or methacrylic acid content of 15-30% by weight.

Alternative acid-functional co-polymers are co-polymers containing sulphonic acid, phosphonic acid or phosphoric acid (acid phosphate) groups. If alternative acid groups are used they are also present in an addition co-polymer, for example an addition copolymer of an olefinically unsaturated phosphonic, phosphoric or sulphonic acid. Examples of such unsaturated acids are vinyl phosphonic acid, styrene phosphonic acid, 2-acrylamidopropane phosphonic acid, ethylidene-1,1-diphosphonic acid, hydroxyethyl acrylate monophosphate, vinyl sulphonic acid, 2-acrylamido-2-methylpropane sulphonic acid and styrene sulphonic acid. Polymers containing stronger acid groups such as sulphonic acid groups may have a higher equivalent weight for example in the range 500-5000, preferably 1000-2000.

In one embodiment, the monoamine which is used to form the amine salt of the acid-functional co-polymer preferably includes at least one organic group containing at least 8 carbon atoms, more preferably 8 to 20 carbon atoms, and is preferably an amine which has a low toxicity towards marine organisms (*vide supra*). The monoamine may be a primary; secondary or a tertiary amine.

The monoamine can for example be a diterpene-derived amine as described above for monoamines. As mentioned above, such diterpene-derived amines can be. used as a mixture with one or more other high molecular weight amines in forming a binder for an antifouling paint according to the invention: Such a mixture of amines preferably contains at least 50% by weight of the diterpene-derived amine of formula (II), for example 60-90% by weight.

The amine salt formed from the acid-functional polymer is substantially insoluble in water and controls the rate of dissolution of the acid-functional co-polymer in seawater. The amine salt gradually dissociates on prolonged immersion in seawater, for example on a ship's hull in service. The amine is gradually released into the seawater. The remaining acid-functional polymer is gradually converted to free acid or anion form and becomes seawater-soluble and is gradually swept from the hull of the ship. The paints containing the amine salts of an acid-functional polymer thus act as self-polishing coatings.

The blocked acid-functional co-polymer can be prepared by addition polymerisation of the corresponding blocked acid-functional monomer, i.e.. an amine salt of a polymerisable ethylenically unsaturated acid such as acrylic or methacrylic acid, with one or more co-monomers. Polymerisation is preferably carried out in an organic solvent such as xylene, toluene, butyl acetate, butanol, butoxyethanol or methoxypropyl acetate at a temperature of 60-100°C using a free radical catalyst such as benzoyl peroxide or azobisisobutyronitrile. The amine salt is preferably formed in solution in a polar organic solvent by reaction of an acidic monomer such as acrylic or methacrylic acid with the amine to produce an amine salt and polymerised without isolating the salt, although it can be isolated if desired. The blocked acid-functional polymer can alternatively be prepared by reacting an acid-functional co-polymer having free carboxyl groups with an amine as blocking agent to form an amine salt. The amine salt can be formed by simply mixing the amine and a solution of the acid-functional polymer, preferably in an organic solvent such as an aromatic hydrocarbon, a ketone, an alcohol or an ether alcohol.

The acid-functional monomer comprising a diamine blocking group, X, as defined in formula III above, is preferably co-polymerised with one or more co-monomers which are unreactive with acid groups in a similar way a discussed above in connection with the monoamines and the quaternary ammonium salts. Thus, typical examples of such co-monomers are for example acrylic or methacrylic esters such as methyl acrylate, methyl methacrylate, ethyl acrylate, butyl acrylate, methoxy ethyl methacrylate or 2-ethylhexyl methacrylate, styrene, acrylonitrile, vinyl acetate, vinyl butyrate, vinyl chloride or vinyl pyridine. Terpolymers may be preferred, for example methyl methacrylate or ethyl methacrylate which tend to form a hard film can be used in conjunction with an acrylate such as ethyl acrylate or particularly an alkyl acrylate of 3 to 8 carbon atoms in the alkyl moiety such as butyl acrylate which helps to form a more flexible film. A substituted acrylate ester can be used as one of the co-monomers, for example.

In addition to the above-mentioned chemistries discussed in connection with the blocking group X, it is contemplated that also tri- or multi-amines (such as tetraamines, pentaamines, hexaamines) may prove useful as blocking groups.

In the present context, the terms "self-polishing" and "polishing" are intended to mean that the coating in question, or the paint when dried up as a coating, under the test conditions described in the Polishing Rate Test herein, is subject to a reduction of the thickness of the coating of at least 1 µm per 10,000 Nautical miles (18,520 km) of relative movement between the coated surface and the surrounding aqueous medium due to removal of coating material from the surface of the coating.

In the present context the term "% by solids volume" is intended to mean the volume/volume percentage of the dry matter of the paint.

It is presently believed that the fibres to be used within the present invention should fulfil certain criteria with respect to dimensions in order to provide the improved properties of the paints within the present invention. Thus, with respect to average length and average thickness of the fibres which are added to the paint during manufacture of the paint, such fibres have an average length of 25-2000 µm and an average thickness of 1-50 µm with a ratio between the average length and the average thickness of at least 5, especially an average length of 25-500 µm and an average thickness of 1-25 µm with a ratio between the average length and the average thickness of at least 10, in particularly an average length of 50-250 µm (such as 50-170 µm) and an average thickness of 2-10 µm with a ratio between the average length and the average thickness of at least 15, such as at least 20.
It should be noted that the term "length" refers to the greatest dimension of the fibre particle in question. The term "average" when used in connection with length indicates that a certain variation of the length of fibres exists within the distribution of the fibres used. The term "average thickness" also refers to the fibres in question, however with regard to the distribution of fibres also taking into account the longitudinal and cross-sectional variation with each individual fibre.

Generally, "fibres" is intended to cover any fibres within the groups of natural inorganic fibres, synthetic inorganic fibres, natural organic fibres, synthetic organic fibres, and metallic fibres, or mixtures thereof. Without being bound to any specific theory, it is however presently believed that natural inorganic fibres and synthetic inorganic fibres, in particular mineral fibres of these types, are especially preferred.

In order for a certain particle to be considered as a fibre within the present context, the ratio between the greatest dimension and the smallest dimension perpendicular to the length dimension in substantially all points along the longitudinal axis (the length dimension - longest dimension), should not exceed 2.5:1, preferably not exceed 2:1. Furthermore, the ratio between the longest dimension and the average of the two shortest dimensions should be at least 5:1. Thus, fibres are characterised of having one long dimension and two short dimension, where the long dimension is substantially longer than the two short dimensions (typically by an order of magnitude, or even more), and the two short dimensions are substantially equal (of the same order of magnitude). For completely regular fibres, i.e. fibres having a cylindrical shape, it is evident how to determine the "length" (longest dimension) and the two (identical) shortest dimensions. For more irregular fibres, it is believed that the relationship between the dimensions can be evaluated by the following hypothetical experiment: A regular, right-angled box is constructed around the fibre. The box is constructed so as to have the smallest possible volume as it should fully comprise the fibre. To the extent that the fibre is curved, it is (again hypothetically) assumed that the fibre is flexible so that the volume of the hypothetical box can be minimised by "bending" the fibre. In order for the "fibre" to be recognised as so in the present context, the ratio between the two smallest dimensions of the box should be at the most 2.5:1 (preferably 2:1) and the ratio between the longest dimension of the box and the average of the two smallest dimensions of the box should be at least 5:1.

The above is given as a general guideline in order to exclude other types of particles which may be referred to as "fibres" but which do have less satisfactory properties within the present invention. In particular, the term "fibre" is not intended to include so-called "fibre" materials which are used as fillers (e.g. thixotropic agents and frayed type fillers with no well defined dimensions such as asbestine), cf. Hawley's Condensed Chemical Dictionary, 11^{th} Ed., (Sax and Lewis, eds.), Van Nostrand Reinhold Company, New York, 1987, page 521. Neither does "fibre" include flake type fillers, e.g. mica, cf. the definition above. With respect to "curved" fibres, it should be understood that the length dimension should be considered as the length along the curve defined by the fibre.

Examples of inorganic fibres are carbide fibres such as silicon carbide fibres, boron carbide fibres, niobium carbide fibres; nitride fibres such as silicon nitride fibres; boron containing fibres such as boron fibres, boride fibres; silicon-containing fibres such as silicon fibres, alumina-boron-silica fibres, E-glass (non-alkaline alumoborosilicate) fibres, C-glass (non-alkaline or low-alkaline soda lime-alumoborosilicate) fibres, A-glass (alkaline soda lime-silicate) fibres, S-glass fibres, CEMFIL-glass fibres, ARG-glass fibres, mineral-glass fibres, non-alkaline magnesia alumosilicate fibres, quartz fibres, silicic acid fibres, silica fibres, high-silica fibres, alumina high-silica fibres, alumosilicate fibres, aluminium silicate fibres, magnesia alumosilicate fibres, soda borosilicate fibres, soda silicate fibres, polycarbosilane fibres, polytitanocarbosilane fibres, polysilazane fibres, hydridopolysilazane fibres, tobermorite fibres, samarium silicate fibres, wollastonite fibres, potassium aluminium silicate fibres; metal fibres such as iron fibres, aluminium fibres, bismuth fibres, antimony fibres, wolfram fibres, molybdenum fibres, chrome fibres, copper fibres, germanium fibres, rhodium fibres, beryllium fibres, and metal alloy fibres thereof such as bronze fibres, aluminium-nickel alloy fibres, copper-tin alloy fibres, steel fibres; oxide fibres such as zirconia fibres, alumina fibres, magnesia fibres, zinc oxide fibres, indium oxide fibres, titanium oxide fibres, beryllium oxide fibres, nickel oxide fibres, thorium oxide fibres, yttrium oxide fibres, potassium titanate fibres; carbon fibres such as pure carbon fibres, graphite fibres, slagwool fibres, charcoal fibres; sulphide fibres such as zinc sulphide fibres, cadmium sulphide fibres; phosphate fibres such as hydroxyapatite fibres, calcium hydrogenphosphate (brushite) fibres, neodymium pentaphosphate fibres, and silver phosphate fibres; calcium sulphate fibres; tin iodide fibres; calcium iodate fibres; calcium fluoride fibres; ; sodium aluminium hydroxycarbonate fibres; rockwool fibres such as pure rockwool fibres and basalt rockwool fibres; processed mineral fibres from mineral wool; volcanic rock fibres; montmorillonite fibres; atapulgite fibres; calcined bauxite fibres; modified by any chemical or physical processes; and any mixture thereof.

Examples of natural and synthetic organic fibres are aromatic polyamide fibres such as poly(p-benzamide) fibres, poly(p-phenylene-terephthalamide) fibres, poly(p-phenylene-2,6-naphthalamide) fibres, poly(3,4'-diphenylether-terephthalamide) fibres, poly(p-phenylene-(p-benzamide)-terephthalamide) fibres, poly(p-benzhydrazide terephthalamide) fibres, poly(m-phenylene-isophthalamide) fibres, poly(N,N'-m-phenylene-bis(m-benzamide)-terephthalamide) fibres, poly(N,N'-m-phenylene-bis(m-benzamide)-2,6-naphthalamide) fibres, poly(N,N'-m-phenylene-bis(m-benzamide)-4,4'-biphenyl-dicarboxamide) fibres, poly(4,4'-bis(p-aminophenyl)-2,2'-bithiazole-isophthalamide) fibres, poly(2,5-bis(p-aminophenyl)-1,3,4-oxa-diazole-isophthalamide) fibres, poly(4,4'-diaminobenzanilide-isophthalamide) fibres, poly(2-methyl-p-phenylene-2,6-naphthalamide) fibres, poly(2,6-dichloro-p-phenylene-2,6-naphthalamide) fibres; aromatic polyhydrazide fibres such as poly(terephthalic-m-phenylene-hydrazide) fibres, poly(terephthalic-hydrazide) fibres, poly(p-phenylene-N-methyl-hydrazide) fibres; aromatic polyester fibres such as poly(chloro-1,4-phenylene-ethylene-dioxy-4,4'-benzoate-co-terephthatate) fibres, poly(chloro-1,4-phenylene-4,4'-oxydibenzoate) fibres, poly(methyl-1,4-phenylene-4,4'-oxydibenzoate) fibres, poly(chlorophenylene-hexahydroterephthafate) fibres; aromatic polyazomethine fibres such as poly(nitrilo-(2-methyl-1,4-phenylene)nitrilomethylidyne-1,4-phenylenemethylidyne) fibres; aromatic polyimide fibres such as aromatic polypyromellitimide fibres, aromatic polytrimellitimide fibres, polyester-imide fibres, poly(4,4'-diphenyl-ether-pyromellitimide) fibres; aromatic heterocyclic polymeric fibres such as polybenzimidazole fibres such as poly-(2,2'-(m-phenylene)-5,5'-bibenzimidazofe) fibres, polybenzothiazole fibres such as poly(2-(1,4-phenylene)-2'-(6,6'-bibenzothiazole)) fibres and poly(2-(1,3-phenylene)-2'-(6,6'-bibenzothiazole)) fibres, polybenzoxazole fibres such as poly((1,7-dihydrobenzo(1,2-d:4,5-d')dioxazole-2,6-diyl)-1,4-phenylene) fibres and poly((benzo(1,2-d:4,5-d')bisoxazol-2,6-diyl)-1,4-phenylene) fibres, polyoxadiazole fibres such as polyarylene-1,3,4-oxadiazole fibres; cellulose fibres such as α-cellulose fibres, β-cellulose fibres, mineral cellulose fibres, methylcellulose fibres, cellucotton fibres, regenerated cellulose (rayon) fibres, cellulose acetate fibres, jute fibres, cotton fibres, linen fibres, ramie fibres, sisal fibres, heme fibres, flax fibres, cyanoethylated cellulose fibres, acetylated cellulose fibres; wood fibres such as pine, spruce and fir wood fibres, lignin fibres and fibres of lignin derivatives; rubber fibres and fibres of derivatives of rubber; polyolefin fibres such as polyethylene fibres, polypropylene fibres, polytetrafluoroethylene fibres, polybutadiene fibres; polyacetylene fibres; polyester fibres; acrylic fibres and modified acrylic fibres such as acrylic acid fibres, styrol/acrylate fibres; acrylonitrile fibres such as acrylonitrile fibres and polyacrylonitrile fibres; elastomeric fibres; protein fibres such as casein fibres, maize protein fibres, soybean protein fibres, groundnut protein fibres; alginate fibres; poly(ethylene terephthalate) fibres; polyvinyl alcohol fibres; aliphatic polyamide fibres such as nylon fibres e.g. nylon 6.6 fibres, nylon 6 fibres, nylon 6.10 fibres; poly(phenylene sulphide) fibres; polyvinylchloride fibres; polychloroethene fibres; poly(bisbenzimidazobenzophenanthrolin) fibres; polyoxymethylene fibres; polyurethane fibres; vinyl polymeric fibres; viscose fibres; modified by any chemical or physical processes; and any mixture thereof.

It is presently believed that one very interesting group of fibres is inorganic fibres, in particular mineral fibres. Particularly preferred examples of such fibres are silicon-containing fibres; metal fibres; oxide fibres; carbon fibres; rockwool fibres; processed mineral fibres from mineral wool; volcanic rock fibres; wollastonite fibres; montmorillonite fibres; tobermorite fibres; atapulgite fibres; and calcined bauxite fibres.

At present, especially preferred are mineral fibres such as mineral-glass fibres, wollastonite fibres, montmorillonite fibres, tobermorite fibres, atapulgite fibres, calcined bauxite fibres, volcanic rock fibres, bauxite fibres, rockwool fibres, and processed mineral fibres from mineral wool. Examples of commercially available mineral fibres which are believed to improve the mechanical properties according to the invention are (average fibre length in µm; average fibre thickness in µm):
1. Inorphil 061-10 ex Laxå Bruk AB (Sweden), synthetic mineral fibre (140;4)
2. Inorphil 161-10 ex Laxa Bruk AB (Sweden), synthetic mineral fibre (140;4)
3. Inorphil 361-10 ex Laxå Bruk AB (Sweden), synthetic mineral fibre (140;4)
4. Inorphil 061-20 ex Laxå Bruk AB (Sweden), synthetic mineral fibre (160;4)
5. Inorphil 461-20 ex Laxå Bruk AB (Sweden), synthetic mineral fibre (160;4)
6. Inorphil 061-30 ex Laxå Bruk AB (Sweden), synthetic mineral fibre (200;4)
7. Inorphil 061-60 ex Laxå Bruk AB (Sweden), synthetic mineral fibre (300;4)
8. MS 600 ex Lapinus Fibres BV (The Netherlands), volcanic rock fibre (125;5)
9. P045-MS 600 (or MS600 Roxul 1000) ex Lapinus Fibres BV (The Netherlands), mineral fibre (125;5.5)
10. RF 5104 ex Lapinus Fibres BV (The Netherlands), volcanic rock fibre (125;5)
11. RF 5118 ex Lapinus. Fibres BV (The Netherlands), volcanic rock fibre (650;5)
12. FG 400/060 ex Schwarzwälder Textil-Werke (Germany), E-glass (230;9-14)
13. FG 400/300 ex Schwarzwälder Textit-Werke (Germany), E-glass (400;9-14)
14. FG 400/100 ex Schwarzwälder Textil-Werke (Germany), E-glass (250;9-14)
15. FG 440/040 ex Schwarzwälder Textil-Werke (Germany), E-glass (150;9-14)
16. F 550/1 S ex Schwarzwälder Textil-Werke (Germany), mineral glass (500;4.4)
17. F 554/1 SR ex Schwarzwälder Textil-Werke (Germany), rockwool (500;5)
18. F 580/1 S ex Schwarzwälder Textil-Werke (Germany), ceramic (500;2.8)
19. Nyad G ex Nyco Minerals (U.S.A), wollastonite (length/diameter ratio 15:1)
20. Tixal 102 ex Tixal (Germany), C-glass (-;-)
21. Tixal 202 ex Tixal (Germany), C-glass (-;-)
22. RCF-600 ex Sumitomo (Japan), C-glass (820;-)
23. RCF-160 ex Sumitomo (Japan), C-glass (250;-)
24. RCF-140 ex Sumitomo (Japan), C-glass (175;-)
25. RCF-140G ex Sumitomo (Japan), C-glass (175;-)
26. RCF-140N ex Sumitomo (Japan), C-glass (175;-)

Examples of commercially available organic fibres which are believed to improve the mechanical properties according to the invention are (average fibre length in µm; average fibre thickness in µm):
27. F PA 222/040 ex Schwarzwälder Textil-Werke (Germany), polyamide (500;15-30)
28. F PA 240/040 ex Schwarzwälder Textil-Werke (Germany), polyamide (500;15-30)
29. F PA 230/040 ex Schwarzwälder Textil-Werke (Germany), polyamide (500;15-35)
30. F PAC 238/040 ex Schwarzwälder Textil-Werke (Germany), polyacrylonitrile (500;-)
31. F PES 231/040 ex Schwarzwälder Textil-Werke (Germany), polyester/polyamide (500;10-20)
32. F PP 261/040 ex Schwarzwälder Textil-Werke (Germany), polypropylene (500;21)
33. F PAC O 245/040 ex Schwarzwälder Textil-Werke (Germany), polyacrylonitrile preoxidized (500;10-12).
34. F 501/050 ex Schwarzwalder Textil-Werke (Germany), jute (500;30-500)
35. Sylothix 51 ex Grace AS (Germany), polyethylene (400;-)
36. Sylothix 52 ex Grace AB (Germany), polyethylene + silica (400;-)
37. Arbocel BE 00 ex J. Rettenmaier & Söhne GmbH + Co. (Germany), cellulose (120;20)
38. Lignocel C 120 ex J. Rettenmaier & Söhne GmbH + Co. (Germany), conifer (70-150;-)
39. Lignocel C 250 A ex J. Rettenmaier & Söhne GmbH + Co. (Germany), conifer (150-250;-)
40. Technocel 300 ex C. F. F. Cellulose-Füllstoff-Fabrik (Germany), cellulose (65% <90;-)
41. Technocel 200 ex C. F. F. Cellulose-Füllstoff-Fabrik (Germany), cellulose (80% <90;-)
42. Technocel 150 DU ex C. F. F. Cellulose-Füllstoff-Fabrik (Germany), cellulose (95% <90;-)
43. Technocel 90 DU ex C. F. F. Cellulose-Füllstoff-Fabrik (Germany), cellulose (65% <32;-)
44. Technocel 400 C ex C. F. F. Cellulose-Füllstoff-Fabrik (Germany), cellulose (-;-)
45. F PP 261/040 ex Schwarzwälder Textil-Werke, polypropylene fibre, white, (500;21)
46. FB1/035 ex Schwarzwälder Textil-Werke, cotton fibre, white, (400;-)
47. F PAC 235/040 ex Schwarzwälder Textil-Werke, polyacrylonitrile fibre, white, (500;-)

It is however also presently believed that some organic fibres can be especially advantageous within the present invention. Particularly preferred examples of such fibres are aromatic polyamide fibres; aromatic polyester fibres; aromatic polyimide fibres; cellulose fibres; cotton fibres; wood fibres; rubber fibres and fibres of derivatives of rubber; polyolefin fibres (e.g. polypropylene fibres); polyacetylene fibres; polyester fibres; acrylic fibres and modified acrylic fibres; acrylonitrile fibres (e.g. preoxidised acrylonitrile fibres); elastomeric fibres; protein fibres; alginate fibres; poly(ethylene terephthalate) fibres; polyvinyl alcohol fibres; aliphatic polyamide fibres; polyvinylchloride fibres; polyurethane fibres; vinyl polymeric fibres; and viscose fibres. Presently even more preferred examples of such fibres are polyethylene fibres, polypropylene fibres, cotton fibres, cellulose fibres, polyacrylonitrile fibres, preoxidised polyacrylonitrile fibres, and polyester fibres.

Although the organic fibres should fulfil essentially the same criteria with respect to average length and average thickness as the inorganic fibres and often fall within the same ranges with respect to preferred average length and average thickness, it is believed that advantageous organic fibres in special embodiments may be considerable longer than indicated above. Thus, in a special embodiment, the organic fibres preferably have an average length of 100-1500 µm and an average thickness of 1-50 µm, such as 1-30 µm, with a ratio between the average length and the average thickness of at least 5, especially an average length of 200-750 µm and an average thickness of 2-15 µm with a ratio between the average length and the average thickness of at least 15.

In view of the above, it is presently believe that a particularly interesting group of fibres (including inorganic as well as organic fibres) is mineral fibres such as mineral-glass fibres, wollastonite fibres, montmorillonite fibres, tobermorite fibres, atapulgite fibres, calcined bauxite fibres, volcanic rock fibres, bauxite fibres, rockwool fibres, processed mineral fibres from mineral wool, polyethylene fibres, polypropylene fibres, cotton fibres, cellulose fibres, polyacrylonitrile fibres, preoxidised polyacrylonitrile fibres, and polyester fibres.

The surface of the fibres may or may not have been modified (surface treated) by chemical or physical processes. Examples of such modification processes used to improve the beneficial effects of the fibres are carbonisation; silylation; surface oxidation; etching such as treatment with alkalimetal hydroxide, treatment with hydrofluoric acid; coating; polyelectrolytic entrapment in the porous surface structures; adsorption processes; hydrogen-bonding processes; cationic bonding processes; esterification; anionic bonding processes as well as any modification processes included in the manufacturing of the fibres.

Without being bound to any theory, it is envisaged that the inorganic fibres, in particular the mineral fibres, mentioned above have the most interesting properties with respect to ease of incorporation into the paint (before or after mixing/milling), *i.e*. the compatibility between the fibres, both in the native form as well as in any surface modified form, and polymer-based binder system is favourable thereby leading to the envisaged improvement of the properties of the paint compositions.

It is presently believed that an especially relevant feature for the fibres to be incorporated in the paints is the ability to biodegrade under physiological conditions, especially in the respiratory organs (the lungs) of mammals, especially humans. Thus, it is believed that especially interesting fibres are those which are able to biodegrade when present in a modified Gamble's solution as defined in WO 96/14454, page 9. The degree of biodegradablity should preferably be at least 20 nm/day, such as at least 30 nm/day, in particular at least 50 nm/day when tested as described in WO 96/14454. Examples of suitable biodegradable fibres are the ones described in WO 96/14454 and WO 96/14274. A specific example thereof is the commercially available P045-MS 600 (or MS600 Roxul 1000) ex Lapinus Fibres BV (see below). The biodegradability is especially relevant for mineral fibres.

In view of the above, it is also envisaged that biodegradable fibres can be advantageously used in a number of other self-polishing antifouling paints such as self-polishing paints having a high content of rosin, e.g. the ones described in WO 97/44401 and WO 96/15198.

The fibres may, as it will be clear from the description of the manufacture processes further below, be added together with the remaining paint constituents before milling or may be added afterwards. It can however be expected that the average length of the fibres will be slightly reduced during the paint manufacture process (see further below), *e.g*., due to the milling process. (Milling is typically performed in order to break up agglomerates of fibres and other particles in the paint composition). It is believed that the paint manufacture process should be performed so that the fibres in the ready-to-use paint have an average length of 25-2000 µm and an average thickness of 1-50 µm with a ratio between the average length and the average thickness of at least 5, especially an average length of 25-500 µm and an average thickness of 1-25 µm with a ratio between the average length and the average thickness of at least 5, in particularly an average length of 50-250 µm (such as 50-170 µm) and an average thickness of 2-10 µm with a ratio between the average length and the average thickness of at least 5.

The concentration of the fibres is normally in the range of 0.1-25% by solids volume of the paint, such as 0.5-10% by solids volume of the paint. Especially relevant concentrations of fibres, depending upon the type and size of the fibres, may be 2-10%, such as 2-7%, or 3-10%, such as 3-8% by solids volume of the paint.

It should be understood that the above ranges refer to the total amount of fibres, thus, in the case where two or more fibre types are utilised,. the combined amounts should fall within the above ranges.

The specific fibres used within the present invention may, in principle, be any fibres which, either in the native form or after surface modification, will improve the properties of an antifouling paint when tested in the Blister Box Test and/or the Rotor Test herein. Preferred fibres according to the invention are those which when incorporated in Model Paint Composition A in an amount of 5% by solids volume and tested in the Blister Box Test or tested for two months in the Rotor Test herein, result in a decrease with respect to "Size of cracks", "Density of cracking", "Flaked area" or "Size of flaking" of at least 1 Ranking Unit Value, preferably at least 2 Ranking Unit Values, such as at least 3 Ranking Unit values, when compared to an identical test performed on the paint without fibres.

Examples of fibres which are particular preferred are such fibres which, when incorporated in the Model Paint Composition A (as described herein) in an amount of 5% by solids volume, and when tested in the Rotor Test for four months, six months, eight months, ten months or even twelve months (as described herein) shows a decrease with respect to "Size of cracks", "Density of cracking", "Flaked area" or "Size of flaking" of at least 1 Ranking Value Unit, preferably at least 2 Ranking Value Units, such as at least 3 Ranking value Units, when compared to an identical test performed on the paint without fibres.

Self-polishing antifouling paints may include biologically active agents (see further below). In this case, self-polishing antifouling paints should be designed to regulate the leaching of biologically active agents by a controlled, and preferably uniform, dissolution of the paint through the entire coating lifetime, usually 2-5 years. The optimal design and performance of self-polishing antifouling paints depend on several variables associated with the ship profile and sailing pattern. Water temperature, fouling intensity, water salinity, dry-docking intervals, speed, and activity are the main factors that influence the paint behaviour. Thus, it should be possible to tailor make antifouling paint having polishing rates in a wide range so that the paint technology is applicable for a number of different vessel types.

Normally a ship operating at low speed with very low activity in an area of a high fouling intensity, *e.g.* a coastal fishing vessel sailing on Singapore, will need a relatively fast self-polishing antifouling paint, *e.g*. having a polishing rate in the range of 10-30 µm per 10,000 Nautical miles, in order to release sufficient amounts of biologically active agents to keep the hull free of fouling. On the other hand a ship operating at high speed with very high activity in an area of a low to moderate fouling intensity, *e.g.* a container ship in Iceland, will need a relatively slow self-polishing antifouling paint, *e.g.* having a polishing rate in the range of 1-3 µm per 10,000 Nautical miles.

As mentioned above, the content of the co-polymer defined above constitute from about 10% by solids volume, such as at least 40% by solids volume of the binder system, preferably at least 50% by solids volume, in particular at least 60% by solids volume, such as at least 70% by solids volume, e.g. at least 80% by solids volume. In some cases the co-polymer defined above may constitute as much as 70-100% by solids volume of the binder system, such as 80-100% by solids volume of the binder system.

As a general guideline for self-polishing paints, it is believed that for a relatively low _ concentration of the blocked acid functional monomers, such as ammonium sulphonate monomers, it is relevant to have a relatively high content of the co-polymer in the binder system, and *vice versa.*

This being said, it is believed that one relevant embodiment is where the concentration of ammonium (preferably quaternary ammonium) sulphonate monomers in the co-polymer is in the range of 3-20 mol% and where the content of the copolymer is 15-100% by solids volume of the binder system.

In another embodiment, the concentration of (quaternary) ammonium sulphonate monomers in the co-polymer is in the range of 3-15 mol% and the content of the copolymer is 30-100% such as 50-100% by solids volume of the binder system.

In yet another preferred embodiment, the concentration of (quaternary) ammonium sulphonate monomers in the co-polymer is in the range of 3-10 mol% and the content of the copolymer is 30-100% such as 50-100% by solids volume of the binder system.

As will be understood by the person skilled in the art, one or several further binder components may be present in the binder system. Examples of such further binder components are:
oils such as linseed oil and derivatives thereof; castor oil and derivatives thereof; soy bean oil and derivatives thereof;
other polymeric binder components such as saturated polyester resins; polyvinylacetate, polyvinylbutyrate, polyvinylchloride-acetate, copolymers of vinyl acetate and vinyl isobutyl ether; vinylchloride; copolymers of vinyl chloride and vinyl isobutyl ether; alkyd resins or modified alkyd resins; hydrocarbon resins such as petroleum fraction condensates; chlorinated polyolefines such as chlorinated rubber, chlorinated polyethylene, chlorinated polypropylene; styrene copolymers such as styrene/butadiene copolymers, styrene/methacrylate and styrene/acrylate copolymers; acrylic resins such as homopolymers and copolymers of methyl methacrylate, ethyl methacrylate, n-butyl methacrylate, isobutyl methacrylate and isobutyl methacrylate; hydroxy-acrylate copolymers; polyamide resins such as polyamide based on dimerised fatty acids, such as dimerised tall oil fatty acids; cyclised rubbers; epoxy esters; epoxy urethanes; polyurethanes; epoxy polymers; hydroxy-polyether resins; polyamine resins; as well as copolymers thereof;
rosin or rosin equivalents (e.g. those generally and specifically described in WO 97/44401 which is hereby incorporated by reference).

It should be understood that the group of other polymeric binder components may include polymeric flexibilisers such as those generally and specifically defined in WO 97/44401 which is hereby incorporated by reference.

As the paints according to the present invention are antifouling paints, it is often advantageous to incorporate at least one biologically active agent in the paint in order to further enhance the antifouling properties.

In the present context the term "biologically active agent" is intended to mean any chemical compound or mixture of chemical compounds which has the capability of suppressing the settlement and/or growth of marine organisms, to any substrate containing the biologically active agent. The suppression can be executed by any mechanism lethal to the organisms, by any mechanism resulting in deterrence and/or repellence of the organisms with or without causing mortality or by any mechanism inhibiting the settlement of the organisms with or without causing mortality.

Examples of biologically active agents are:
organometals such as metallo-dithiocarbamates such as bis(dimethyldithiocarbamato)zinc, ethylene-bis(dithiocarbamato)zinc, ethylene-bis(dithiocarbamato)manganese, and complexes between these; bis(1-hydroxy-2(1H)-pyridinethionato-O,S)-(T-4) copper; copper acrylate; bis(1-hydroxy-2(1H)-pyridinethionato-O,S)-(T-4) zinc; phenyl(bispyridyl)-bismuth dichloride;;
metal biocides such as copper, copper metal alloys such as copper-nickel alloys; metal oxides such as cuprous oxide and cupric oxide (even though *e.g*. cuprous oxide and cupric oxide may have pigment characteristics, it is understood that in the present context such biologically active agents are only considered as "biologically active agents"); metal salts such as cuprous thiocyanate, barium metaborate, and copper sulphide;
heterocyclic nitrogen compounds such as 3a,4,7,7a-tetrahydro-2-((trichloromethyl)-thio)-1H-isoindole-1,3(2H)-dione, pyridine-triphenylborane, 1-(2,4,6-trichlorophenyl)-1H-pyrrole-2,5-dione, 2,3,5,6-tetrachloro-4-(methylsulphonyl)-pyridine, 2-methylthio-4-tert-butylamino-6-cyclopropylamine-s-triazin, and quinoline derivatives;
heterocyclic sulphur compounds such as 2-(4-thiazolyl)benzimidazole, 4,5-dichloro-2-octyl-3(2H)-isothiazolone, 4,5-dichloro-2-octyl-3(2H)-isothiazoline, 1,2-berizisothiazotin-3-one, and 2-(thiocyanatomethylthio)-benzothiazole;
urea derivatives such as N-(1,3-bis(hydroxymethyl)-2,5-dioxo-4-imidazolidinyl)-N,N'-bis(hydroxymethyl)urea, and 3-(3,4-dichlorophenyl)-1,1-dimethyl urea;
amides or imides of carboxylic acids; sulphonic acids and of sulphenic acids such as 1,1-dichloro-N-((dimethylamino)sulphonyl)-1-fluoro-N-(4-methylphenyl)-methanesulphenamide, 2,2-dibromo-3-nitrilo-propionamide, N-(dichlorofluoromethylthio)-phthalimide, N,N-dimethyl-N'-phenyl-N'-(dichlorofluorometitylthio)-sulphamide, and N-methylol formamide;
salts or esters of carboxylic acids such as 2-((3-iodo-2-propynyl)oxy)-ethanol phenylcarbamate and N,N-didecyl-N-methyl-poly(oxyethyl)ammonium propionate;
amines such as dehydroabiethylamines and cocodimethylamine;
substituted methane such as di(2-hydroxy-ethoxy)methane, 5,5'-dichloro-2,2'-dihydroxydiphenylmethane, and methylene-bisthiocyanate;
substituted benzene such as 2,4,5,6-tetrachloro-1,3-benzenedicarbonitrile, 1,1-dichloro-N-((dimethylamino)-sulphonyl)-1-fluoro-N-phenylmethanesulphenamide. and 1-((diiodomethyl)sulphonyl)-4-methyl-benzene;
tetraalkyl phosphonium halogenides such as tri-n-butyltetradecyl phosphonium chloride;
guanidine derivatives such as n-dodecylguanidine hydrochloride;
disulphides such as bis-(dimethylthiocarbamoyl)-disulphide, tetramethylthiuram disulphide;
and mixtures thereof.

Presently, it is preferred that the biologically active agent is an agent which do not comprise tin.

In the antifouling paint, the total amount of the biologically active agent(s) may be in the range of 2-50%, such as 3-50%, by solids volume of the paint, preferably 5-50%, such as 5-40%, by solids volume of the paint. Depending upon the type and specific activity of the biologically active agent, the total amount of the biologically active agent may, *e.g*., be 5-15% or 10-25% by solids volume of the paint.

A typical marine antifouling paint according to the invention comprises a binder system based on a co-polymer as defined above, optionally at least one biologically active agent, and fibres as defined above. Furthermore, the antifouling paint may comprise one or more components selected among pigments, fillers, dyes, additives, and solvents. It should be understood that any solvents are not included in the contents stated as "% by solids volume". Instead, the content of solvent(s) is expressed as "solids volume ratio" or SVR which indicates the volume of the dry matter in relation to the total volume of the paint including the solvent.

Examples of pigments are grades of titanium dioxide, red iron oxide, zinc oxide, carbon black, graphite, yellow iron oxide, red molybdate, yellow molybdate, zinc sulphide, antimony oxide, sodium aluminium sulphosilicates, quinacridones, phthalocyanine blue, phthalocyanine green, titaniumdioxide, black iron oxide, graphite, indanthrone blue, cobalt aluminium oxide, carbazole dioxazine, chromium oxide, isoindoline orange, bis-acetoacet-o-tolidiole, benzimidazolon, quinaphtalone yellow, isoindoline yellow, tetrachloroisoindolinone, quinophthalone yellow. Such materials are characterised in that they render the final paint coating non-transparent and non-translucent. The pigments may further be selected from pigment-like ingredients such as fillers. Examples of fillers are calcium carbonate, dolomite, talc, mica, barium sulphate, kaolin, silica, perlite, magnesium oxide, calcite and quartz flour, etc. These materials are characterised in that they do not render the paint non-translucent and therefore do not contribute significantly to hide any material below the coating of the paint of the invention.

In a preferred embodiment of the present invention, the paint has a total pigment content (pigment and pigment-like ingredients) in the range of 1-60%, preferably 1-50%, in particular 1-25% such as 1-15%, of the solids volume of the paint.

Examples of dyes are 1,4-bis(butylamino)anthraquinone and other anthraquinone derivatives; toluidine dyes.

Examples of additives are:
plasticizers such as chlorinated paraffin; phthalates such as dibutyl phthalate, benzylbutyl phthalate, dioctyl phthalate, diisononyl phthalate and diisodecyl phthalate; phosphate esters such as tricresyl phosphate, nonylphenol phosphate, octyloxipoly(ethyleneoxy)ethyl phosphate, tributoxyethyl phosphate, isooctylphosphate and 2-ethylhexyl diphenyl phosphate; sulphonamides such as N-ethyl-p-toluensulphonamide, alkyl-p-toluene sulphonamide; adipates such as bis(2-ethylhexyl)adipate), diisobutyl adipate and dioctyladipate; phosphoric acid triethyl ester; butyl stearate; sorbitan trioleate; and epoxidised soybean oil;
surfactants such as derivatives of propylene oxide or ethylene oxide such as alkylphenol-ethylene oxide condensates; ethoxylated monoethanolamides of unsaturated fatty acids such as ethoxylated monoethanolamides of linoleic acid; sodium dodecyl sulphate; alkylphenol ethoxylates; and soya lecithin;
wetting agents and dispersants such as those described in M. Ash and I. Ash, "Handbook of Paint and Coating Raw Materials, Vol. 1", 1996, Gower Publ. Ltd., Great Britain, pp 821-823 and 849-851;
defoaming agents such as silicone oils;
catalysts such as polymerization catalysts and initiators, *e.g*. azobisisobutyronitrile, ammonium persulphate, dilauryl peroxide, di-t-butyl peroxide, cumene hydroperoxide, p-toluenesulphonic acid; dryers, *e.g.* metal octoates and metal naphthenates; and activators, *e.g.* salicylic acid and benzyl alcohol;
stabilizers such as stabilizers against light and heat, *e.g*. hindered amine light stabilizers (HALS), 2-hydroxy-4-methoxybenzophenone, 2-(5-chloro-(2H)-benzotriazol-2-yl)-4-methyl-6-(tert-butyl) phenol, and 2,4-ditert-butyl-6-(5-chlorobenzotriazol-2-yl)phenol; stabilizers against moisture such as molecular sieves or water scavengers such as synthetic zeolites, substituted isocyanates, substituted silanes and ortho formic acid triethyl ester; stabilizers against oxidation such as butylated hydroxyanisole; butylated hydroxytoluene; propylgallate; tocopherols; 2,5-di-tert-butyl-hydroquinone; L-ascorbyl palmitate; carotenes; vitamin A;
polymerization inhibitors, *e.g*., dibenzoyl peroxide. azobis-isobutyronitrile, parabenzoquinone, hydroquinone and methyl-hydroquinone;
inhibitors against corrosion such as aminocarboxylates, calcium silicophosphate, ammonium benzoate, barium/calcium/zinc/magnesium salts of alkylnaphthalene sulphonic acids, zinc phosphate; zinc metaborate;
coalescing agents such as glycols, 2-butoxy ethanol, and 2,2,4-trimethyl-1,3-pentanediol monoisobutyrate; and
thickeners and anti-settling agents such as colloidal silica, hydrated aluminium silicate (bentonite), aluminiumtristearate, aluminiummonostearate, ricinus oil, xanthan gum, salicylic acid, chrysotile, pyrogenic silica, hydrogenated castor oil, organo-modified clays, polyamide waxes and polyethylene waxes.

It is preferred that the paints according to the present invention comprises dyes and additives in a cumulative content of 0-15% by solids volume.

Examples of solvents in which the components of the antifouling paint are dissolved, dispersed or emulsified are water (e.g. in the form of a dispersion or an emulsion); alcohols such as methanol, ethanol, propanol, isopropanol, butanol, isobutanol and benzyl alcohol; alcohol/water mixtures such as ethanol/water mixtures; aliphatic, cycloaliphatic and aromatic hydrocarbons such as white spirit, cyclohexane, toluene, xylene and naphtha solvent; ketones such as methyl ethyl ketone, acetone, methyl isobutyl ketone, methyl isoamyl ketone, diacetone alcohol and cyclohexanone; ether alcohols such as 2-butoxyethanol, propylene glycol monomethyl ether and butyl diglycol; esters such as methoxypropyl acetate, n-butyl acetate and 2-ethoxyethyl acetate; chlorinated hydrocarbons such as methylene chloride, tetrachloroethane and trichloroethylene; and mixtures thereof.

A preferred embodiment of the marine antifouling paint according to the invention is a paint, which comprises one or more pigment(s) and one or more solvent(s) as well as any necessary or desirable dyes and additives.

The antifouling paint may be prepared by any suitable technique that is commonly used within the field of paint production. Thus, the various components may be mixed together using a high speed disperser, a ball mill, a pearl mill, a three-roll mill. The antifouling paints according to the invention may be filtrated using bag filters, patron filters, wire gap filters, wedge wire filters, metal edge filters, EGLM turnoclean filters (ex Cuno), DELTA strain filters (ex Cuno), and Jenag Strainer filters (ex Jenag), or by vibration filtration.

The antifouling paint according to the invention may be applied to the marine structure to be protected by means of any of the usual techniques used within the paint field such as by means of a brush, a roller, a pad, by dipping, by spraying. The exact technique chosen depends upon the object to be protected and also upon the particular composition (such as its viscosity) and upon the particular situation. Preferred applications techniques are spraying and by means of a brush or a roller.

Depending on the application technique, it is desirable that the paint comprises solvent(s) so that the SVR is in the range of 30-100%, such as 30-70%.

The optimal composition of the antifouling paints described herein will of course depend on the characteristics and properties of the individual components of the paint, in particular the type and concentration of the blocked acid functional binder polymer. In an especially interesting embodiments of the present invention, the paint has the following composition:
1) a binder system constituting 10-80% by solids volume of the paint, said binder system comprising a co-polymer as defined herein and optionally further binder components, the concentration of blocked acid functional monomers, in particular ammonium (preferably quaternary ammonium) sulphonate monomers, in the co-polymer being in the range of 3-20 mol% and the content of the copolymer being 15-100% by solids volume of the binder system;
2) fibres constituting 0.1-30% by solids volume of the paint;
3) one or more biologically active agent(s) constituting 2-50% by solids volume of the paint;
4) one or more pigment(s) constituting 1-15% by solids volume of the paint;
5) dyes and additives constituting 0-15% by solids volume of the paint; and
6) optionally one or more solvents.

The antifouling paint according to the invention may be applied to the marine structure to be protected in one or several successive layers, typically 1 to 5 layers, preferably 1 to 3 layers. The total dry film thickness (DFT) of the coating applied per layer will typically be 10-300 µm, preferably 20-250 µm, such as 40-200 µm. Thus, the thickness of the coating will typically be 10-900 µm, preferably 20-750 µm, in particular 40-600 µm, such as 80-400 µm.

The marine structure to which the paint according to the invention may be applied to may be any of a wide variety of solid objects that come into contact with water, for example vessels (including but not limited to boats, yachts, motorboats, motor launches, ocean liners, tugboats, tankers, container ships and other cargo ships, submarines (both nuclear and conventional), and naval vessels of all types); pipes; shore and off-shore machinery, constructions and objects of all types such as piers, pilings, bridge substructures, floatation devices, underwater oil well structures; nets and other mariculture installations; cooling plants; and buoys; and is especially applicable to the hulls of ships and boats and to pipes.

Prior to the application of a paint of the invention to a marine structure, the marine structure may first be coated with a primer-system which may comprise several layers and may be any of the conventional primer systems used in connection with application of antifouling paints to marine structures. Thus, the primer system may include an anticorrosive primer optionally followed by a layer of an adhesion-promoting primer. In a preferred embodiment, the primer-system is a composition having a polishing rate of less than 1 µm per 10,000 Nautical miles, i.e. the primer is a non-self polishing coating.

As mentioned herein, the coating resulting from the paint according to the present invention is preferably self-polishing. Thus, the antifouling paint (actually the coating) should have a polishing rate of at least 1 µm per 10,000 Nautical miles (18,520 km). Preferably the polishing rate is in the range of 1-50 µm, in particular in the range of 1-30 µm per 10,000 Nautical miles (18,520 km).

It is furthermore preferred that the coating resulting from the paint according to the invention shows excellent mechanical properties when tested in various mechanical test.

Thus, in a preferred embodiment, the paint composition according to the invention is a paint composition which
i) when tested for two months in the Rotor Test herein shows a decrease with respect to "Density of cracking", "Size of cracks", "Flaked area" or "Size of flaking" of at least 1 Ranking Value Unit, preferably at least 2 Ranking Value Units, such as at least 3 Ranking Value Units, when compared to an identical test performed on the paint without fibres;
   or
ii) when tested in the Blister Box Test (as described herein) for 8 weeks, or alternatively 16 weeks, shows a decrease with respect to "Density of cracking", "Size of cracks", "Flaked area" or "Size of flaking" of at least 1 Ranking Value Unit, preferably at least 2 Ranking Value Units, such as at least 3 Ranking Value Units, when compared to an identical test performed on the paint without fibres.

It is found that the combination of "Density of cracking" and "Size of cracks" gives a particularly relevant evaluation of the effect of the invention, i.e. either should the "Density of cracking" show a decrease or alternatively should the "Size of cracks" show a decrease. In particular, both the "Density of cracking" and "Size of cracks" should show a decrease. In general it should however be understood that even when the "Density of cracking" is at about the same level than for a paint composition without fibres, a reduction of the "Size of cracks" will also be useful, and vice versa.

Thus, the paint composition should, when tested in the Blister Box Test (as described herein) for 8 weeks, or alternatively 16 weeks, preferably show a decrease with respect to the sum of the ranking of "Density of cracks" and "Size of cracks" of at least 1 Ranking Value Unit, preferably at least 2 Ranking Value Units, such as at least 3, or 4, or 5, Ranking Value Units, when compared to an identical test performed on the paint without fibres

Examples of especially preferred paint compositions according to the invention are such paint compositions, which when tested in the Rotor Test for four months, six months, eight months, ten months or even twelve months (as described herein) shows a decrease with respect to "Density of cracking", "Size of cracks", "Flaked area" or "Size of flaking" of at least 1 Ranking Value Unit, preferably at least 2 Ranking Value Units, such as at least 3 Ranking Value Units, when compared to an identical test performed on the paint without fibres.

In another preferred embodiment of the invention, the paint composition according to the invention is such a paint composition which
i) when tested in the Rotor Test for two months (as described herein) shows a Ranking Value with respect to "Size of cracks" or "Density of cracking" of at the most 1, preferably 0;
   or
ii) when tested in the Rotor Test for two months (as described herein) shows a Ranking Value with respect to "Flaked area" or "Size of flaking" of at the most 1, preferably 0;
   or
iii) when tested in the Blister Box Test (as described herein) for 8 weeks, or alternatively 16 weeks, shows a Ranking Value with respect to "Size of cracks" or "Density of cracks" of at the most 1, preferably 0;
   or
iv) when tested in the Blister Box Test (as described herein) for 8 weeks, or alternatively 16 weeks, shows a Ranking Value with respect to "Flaked area" or "Size of flaking" of at the most 1, preferably 0.

Examples of particular preferred paint compositions according to the invention are such paint compositions, which
i) when tested in the Rotor Test for our, six, eight, ten or even twelve months (as described herein) shows a Ranking Value with respect to "Size of cracks" or "Density of cracking" of at the most 1, preferably 0;
   or
ii) when tested in the Rotor Test for our, six, eight, ten or even twelve months (as described herein) shows a Ranking Value with respect to "Flaked area" or "Size of flaking" of at the most 1, preferably 0.

### EXPERIMENTAL

### Polishing Rate Test

### Microtome test variant

An acrylic test panel (13.5 x 7 cm²) with a curvature corresponding to that of a cylindrical drum with a diameter of 1 m is first coated with 80 µm (DFT) of a commercial vinyl primer (Hempanyl Tar 16280 ex Hempel's Marine Paints A/S) applied by air spraying. After minimum 24 hours drying in the laboratory at room temperature the test paint is applied by air spraying in two coats in a DFT of approximately 100 µm per coat (total test paint DFT: 200 µm). Recoating interval between two coats of test paint: 24 hours. After at least 48 hours drying from the last test paint coat, bands of 1 cm width of a commercial, non-erodible vinyl antifouling coating (Classic 76550 ex Hempel's Marine Paints A/S) are applied along each longitudinal edge by dipping. As a result of this, the central part with a width of 5 cm remained uncovered by the non-erodible coating. The panel is dried for at least 1 week in the laboratory at room temperature before testing.

The test panel is fixed onto the convex surface of a cylindrical drum of 1 m in diameter and is rotated in sea water with a salinity in the range of 37-38 parts per thousand at an average temperature of 17-18°C at a test site in the harbour of Villanova y La Geltrú in Northeastern Spain which is situated at longitude 41.2°N (see also Morale, E. & Arias, E., Rev. Iber. Corros. y Prot., vol XIX(2), 1988, pp. 91-96). The rotor is rotated at a peripheral speed of 15 knots for a relative distance of 33,100 Nautical miles.

Every 3-5 weeks, paint chips (1.0 x 0.5 cm²) are collected from the test panel in such a way that their surface comprised both a part coated with the experimental coating only as well as a part coated with both experimental coating and the non-erodible coating. The chips are embedded in paraffin wax and cut with a microtome. Cross sections of the experimental coating are examined under a microscope. Compared to the part coated with the non-erodible coating, the experimental coating shows a decrease of DFT of the outer layer corresponding to the polishing rate. The polishing rate (polishing per 10,000 Nautical miles (18,520 km)) is calculated.

Polishing rate tests are generally described by Furtado, S.E.J. and Fletcher, R.L., "Test Procedures For Marine Antifouling Paints. Preservatives in The Food Pharmaceutical and Environmental Industries", pp 145-163 (1987) and Van Londen, A.M., "Evaluation of Testing Methods for Antifouling Paints", Journal of Paint Technology, 42, pp 511-515 (1970).

### Isoscope test variant

An acrylic test panel (13.5 x 7 cm²) with a curvature corresponding to that of a cylindrical drum with a diameter of 1 m is first coated with 40 µm of an epoxy primer (Hempadur Primer 15300 ex Hempel's Marine Paints A/S). After 24 hours, the panel is coated with 80 µm (DFT) of a commercial vinyl primer (Hempanyl Tar 16280 ex Hempel's Marine Paints A/S) applied by air spraying. After minimum 24 hours drying in the laboratory at room temperature the test paint is applied by air spraying in two coats in a DFT of approximately 100 µm per coat (total test paint DFT: 200 µm). Recoating interval between two coats of test paint: 24 hours. The initial thickness of the coat of the test paint is measured using an ISOSCOPE MP-3. The panel is dried for at least 1 week in the laboratory at room temperature before testing.

The panel is placed on a rotor as described above. The thickness is controlled with periodic inspections using the ISOSCOPE MP-3. The polishing is the difference between the film thickness measures at a given inspection and the initial film thickness. The polishing rate is expressed as the polishing measured in µm per 10,000 Nm.

### Blister Box Test

### Preparation of panels

Acrylic panels (155x100x5 mm) are first coated with 80 µm (dry film thickness, DFT) of a commercial vinyl tar primer (Hempanyl 16280, from Hempel's Marine Paints) applied by air spraying. After 12-36 hours of drying in the laboratory at room temperature antifouling paints (model paints or commercial paints) are applied in the following way. A template (acrylic panel (155x100x5) with 4 holes (diameter =41 mm)) is placed and fixed on top of the above mentioned panel coated with the primer. The antifouling paint adjusted to an viscosity of 70-75 KU is weighed into one of the holes. The amount of antifouling paint weighed into the whole correspond to a final DFT of 500 µm. The paint is spread throughout the whole surface through circular movements of the panel. Four paints may be applied to each panel (one in each hole). The template is removed 1-1½ hours after the application. The panels are dried for 4-5 days in the laboratory at room temperature before testing.

### Testing

Tests panels are tested in a Cleveland Condensation Tester (QCT from Q-Panel) in condensation and dry-off mode. QCT equipment is described in standard method ASTM D1735-92: *Testing water resistance of coatings using water fog apparatus.* Coated specimens are placed in an enclosed chamber where cycles of water fog (10 hours)/drying (2 hours) are applied. The temperature in the chamber is maintained at 50°C. During the water fog cycle water penetrates into the film while during the drying cycle water "escapes" from the paint film.

The test is operated for two months and the paints are evaluated every week for film defects as described below.

Every week the paints are evaluated with respect to the degree of cracking and the degree of flaking in accordance with the guidelines set forth in ISO standard 4628, parts 4 and 5.

Evaluation of the degree of cracking is based on the below ranking (ISO standard 4628, part 4):

| Density of cracking | Ranking Value |
|---|---|
| None | 0 |
| Less than few | 1 |
| Few | 2 |
| Medium | 3 |
| Medium - dense | 4 |
| Dense | 5 |

| Size of cracks | Ranking Value |
|---|---|
| Not visible under x 10 magnification | 0 |
| Only visible under magnification up to x 10 | 1 |
| Just visible with normal corrected vision | 2 |
| Clearly visible with normal corrected vision | 3 |
| Large cracks generally up to 1 mm wide | 4 |
| Very large cracks generally more than 1 mm wide | 5 |

Evaluation of the degree of flaking is based on the below ranking (ISO standard 4628, part 5):

| Flaked area (%) | Ranking Value |
|---|---|
| 0 | 0 |
| 0.1 | 1 |
| 0.3 | 2 |
| 1 | 3 |
| 3 | 4 |
| 15 | 5 |

| Size of flaking (largest dimension) | Ranking Value |
|---|---|
| Not visible under 10 x magnification | 0 |
| Up to 1 mm | 1 |
| Up to 3 mm | 2 |
| Up to 10 mm | 3 |
| Up to 30 mm | 4 |
| Larger than 30 mm | 5 |

### Rotor Test

An acrylic test panel (13.5 x 7 cm²) with a curvature corresponding to that of a cylindrical drum with a diameter of 1 m is first coated with 80 µm (DFT) of a commercial vinyl primer (Hempanyl Tar 16280 ex Hempel's Marine Paints A/S) applied by air spraying. After minimum 24 hours drying in the laboratory at room temperature the test paint is applied by air spraying in two coats in a DFT of approximately 100 µm per coat (total test paint DFT: 200 µm). Recoating interval between two coats of test paint: 24 hours. After at least 48 hours drying from the last test paint coat, bands of 1 cm width of a commercial, non-erodible vinyl antifouling coating (Classic 76550 ex Hempel's Marine Paints A/S) are applied along each longitudinal edge by dipping. As a result of this, the central part with a width of 5 cm remained uncovered by the non-erodible coating. The panel is dried for at least 1 week in the laboratory at room temperature before testing.

The test panel is fixed onto the convex surface of a cylindrical drum of 1 m in diameter and is rotated in sea water with a salinity in the range of 37-38 parts per thousand at an average temperature of 17-18°C at a test site in the harbour of Villanova y La Geltrú in Northeastern Spain which is situated at longitude 41.2°N (see also Morale, E. & Arias, E., Rev. Iber. Corros. y Prot., vol XIX(2), 1988, pp. 91-96). The rotor is rotated at a peripheral speed of 15 knots for a relative distance of 33,100 Nautical miles.

Every two months (for one year) panels are dried for 15 minutes and evaluated with respect to the degree of cracking and the degree of flaking in accordance with the guidelines set forth in ISO standard 4628, parts 4 and 5 as described above in connection with the Blister Box Test.

### Model Paints

The following model paints (without fibres) were prepared:

### Model Paint Composition A (without fibres)

58%, by solids volume, of a binder comprising a co-polymer as described herein

2%, by solids volume, of wetting agent Disperbyk 164 (ex. Byk Chemie, Germany)

2%, by solids volume, of fumed silica Aerosil 200 (ex. Degussa, Germany)

2%, by solids volume, of modified polyethylene wax Aditix M60 X (ex. Supercolori, Italy)

36%, by solids volume, of cuprous oxide (red copper 97N premium grade ex American Chemet, USA)

Solids volume ratio (SVR): 50; Solvent : xylene

The following model paints (containing fibres) were prepared:

### Model Paint Composition A1 (fibres included)

95% by solids volume of Model Paint A- and 5% (by solids volume) of fibres (Lapinus Rockfibre MS 600 (ex. Lapinus) or F PAC O 245/040 ex Schwarzwälder Textil-Werke)

### Preparation of binder components

### Preparation of methyl 2-acrylamido-2-methylpropanesulphohate (AMPS methyl ester) monomers

In a 200 ml reaction flask equipped with a stirrer, nitrogen inlet, thermometer and distillation arm, a slurry of 2-acrylamido-2-methylpropanesulphonic acid (62.1 g), trimethyl orthoformate (85.3 g), and p-benzoquinone (0.062 g) was maintained at 75-80°C for 4.5 hours. The reaction side products (methanol and methyl formate) were removed by distillation. The resulting solution was concentrated at reduced pressure to about 1/3 of its volume and cooled. The obtained precipitate was collected by filtration, thoroughly washed with water and petroleum ether. The product was dissolved in chloroform and dried with magnesium sulphate. The chloroform solution was evaporated at reduced pressure. The melting point of the product was 75°C (lift. 80.6°C). The yield of AMPS methyl ester was 47%.

### AMPS CTMA/MMA/BA (15:40:45(mol)) salt - low M_{w}

Methyl isoamyl ketone (MIAK) (675 g) was introduced into a 2.5 I reaction flask equipped with a stirrer, a nitrogen inlet, a thermometer, a reflux condenser and a feed inlet. MIAK was heated to 80°C under an atmosphere of nitrogen, and a solution of AMPS methyl ester (225 g), methyl methacrylate (MMA) (271.6 g), butyl acrylate (BA) (391 g), and azobis-isobutyronitrile (AIBN) (58.6 g) in MIAK (450 g) was added over 2 hours. The reaction was maintained at 80°C through the addition period and after that for 3.5 hours. The molecular weight averages were Mₙ=5,800 and M_{w}=15,000. Residual MMA and BA concentrations were <0.01% and 0.12%, respectively. The dry weight of the polymer was 43.2%. The "ester" polymer was converted to the salt by addition of cocodimethylamine (177. g) to the "ester" polymer solution and agitation at room temperature for 2 hours.

### AMPS CTMA/MMA/BA (15:40:45(mol)) salt - high M_{w}

Methyl isoamyl ketone (MIAK) (600 g) was introduced into a 2.5 I reaction flask equipped with a stirrer, a nitrogen inlet, a thermometer, a reflux condenser and a feed inlet. MIAK was heated to 80°C under an atmosphere of nitrogen, and a solution of AMPS methyl ester (225 g), methyl methacrylate (MMA) (271.6 g), butyl acrylate (BA) (391 g), and azobis-isobutyronitrite (AIBN) (18.2 g) in MIAK (525 g) was added over 2 hours. The reaction was maintained at 80°C through the addition period and after that for 2 hours. The molecular weight averages were Mₙ=11.400 and M_{w}=3a,300. Residual MMA and BA concentrations were <0.01% and 0.18%, respectively. The dry weight of the polymer was 41.7%. The "ester" polymer was converted to the salt by addition of cocodimethylamine (177 g) to the "ester" polymer solution and agitation at room temperature for 2 hours.

### AMPS Ester/MMA/BA (15:40:45(mol))

Methyl isoamyl ketone (MIAK) (600 g) was introduced into a 2.5 I reaction flask equipped with a stirrer, a nitrogen inlet, a thermometer, a reflux condenser and a feed inlet. MIAK was heated to 70°C under an atmosphere of nitrogen, and a solution of AMPS methyl ester (225 g), methyl methacrylate (MMA) (271.6 g), butyl acrylate (BA) (391 g), and azobis-isobutyronitrile (AIBN) (13,6 g) in MIAK (525 g) was added over 2 hours. The reaction was maintained at 70°C through the addition period and after that for 2 hours. The reaction temperature was then increased to 80°C and maintained for 2 hours. The molecular weight averages were Mₙ=13,400 and M_{w}=57,000. Residual MMA and BA concentrations were <0.01% and 0.14%, respectively. The dry weight of the polymer was 41.6%.

### Example 1

Model Paint Composition A (without fibres) and Model Paint Composition A1 (with fibres) were prepared as using AMPS CTMA/MMA/BA (15:40:45) salt - low M_{w} as the binder component. Both paints were polishing.

The employed fibre materials were MS 600 ex. Lapinus Fibres and F PAC O 245/040 ex Schwarzwälder Textil-Werke.

The model paints were subjected to the Blister Box Test and the results obtained are compiled in Tables 1.1 and 1.2:

**Table 1.1:**

| *Density of cracking* | | | | | |
|---|---|---|---|---|---|
| | Density of cracking observed after: | | | | |
| Model Paint Composition | | | | | |
| | 0 | 1 | 3 | 5 | 8 (weeks) |
| A (without fibres) | 0 | 0 | 0 | 1 | 1 |
| A1 (with MS 600 fibres) | 0 | 0 | 0 | 0 | 0 |
| A1 (with F PAC O 245/040 fibres) | 0 | 0 | 0 | 0 | 0 |
| A1 (with Mical) | 0 | 1 | 1 | 3 | 3 |

**Table 1.2:**

| *Size of cracks* | | | | | |
|---|---|---|---|---|---|
| | Size of cracks observed after: | | | | |
| Model Paint Composition | | | | | |
| | 0 | 1 | 3 | 5 | 8 (weeks) |
| A (without fibres) | 0 | 0 | 0 | 1 | 1 |
| A1 (with MS 600 fibres) | 0 | 0 | 0 | 0 | 0 |
| A1 (with F PAC O 245/040 fibres) | 0 | 0 | 0 | 0 | 0 |
| A1 (with Mical) | 0 | 0 | 0 | 1 | 1 |

As it appears from the above results a significant reduction of the rating for "density of cracking" as well as for "size of cracking" is observed when 5% by solids volume of the above-mentioned fibre material is incorporated in the paint composition.

### Example 2

Model Paint Composition A (without fibres) and Model Paint Composition A1 (with fibres) were prepared as using AMPS CTMA/MMA/BA (15:40:45) salt - high M_{w} as the copolymer. Both paints were polishing.

The employed fibre materials were MS 600 ex. Lapinus Fibres and F PAC O 245/040 ex Schwarzwälder Textil-Werke.

The model paints were subjected to the Blister Box Test and the results obtained are compiled in Tables 2.1 and 2.2:

**Table 2.1:**

| *Density* of *cracking* | | | | | |
|---|---|---|---|---|---|
| | Density of cracking observed after: | | | | |
| Model Paint Composition | | | | | |
| | 0 | 1 | 3 | 5 | 8 (weeks) |
| A (without fibres) | 0 | 0 | 4 | 4 | 4 |
| A1 (with MS 600 fibres) | 0 | 0 | 0 | 0 | 0 |
| A1 (with F PAC O 245/040 fibres) | 0 | 0 | 3 | 3 | 3 |

**Table 2.2:**

| *Size of cracks* | | | | | |
|---|---|---|---|---|---|
| | Size of cracks observed after: | | | | |
| Model Paint Composition | | | | | |
| | 0 | 1 | 3 | 5 | 8 (weeks) |
| A (without fibres) | 0 | 0 | 1 | 1 | 1 |
| A1 (with MS 600 fibres) | 0 | 0 | 0 | 0 | 0 |
| A1 (with F PAC O 245/040 fibres) | 0 | 0 | 1 | 1 | 1 |

As it appears from the above results a significant reduction of the rating for "density of cracking" as well as for "size of cracking" is observed when 5% by solids volume of the above-mentioned inorganic fibre material is incorporated in the paint composition: incorporation of the organic fibre material results in a reduction of the cracking density.

### Example 3

Model Paint Composition A (without fibres) and Model Paint Composition A1 (with fibres) were prepared as using a 1:1 mixture of AMPS CTMA/MMA/BA (15:40:45) salt - low M_{w} and AMPS Ester/MMA/BA (15:40:45) as the binder. Both paints were polishing.

The employed fibre material was MS 600 ex. Lapinus Fibres.

The model paints were subjected to the Blister Box Test and the results obtained are compiled in Tables 3.1 and 3.2:

**Table 3.1:**

| *Density of cracking* | | | | | |
|---|---|---|---|---|---|
| | Density of cracking observed after: | | | | |
| Model Paint Composition | | | | | |
| | 0 | 1 | 3 | 5 | 8 (weeks) |
| A (without fibres) | 0 | 0 | 0 | 0 | 1 |
| A1 (with MS 600 fibres) | 0 | 0 | 0 | 0 | 0 |

**Table 3.2:**

| *Size of cracks* | | | | | |
|---|---|---|---|---|---|
| | Size of cracks observed after: | | | | |
| Model Paint Composition | | | | | |
| | 0 | 1 | 3 | 5 | 8 (weeks) |
| A (without fibres) | 0 | 0 | 0 | 0 | 5 |
| A1 (with MS 600 fibres) | 0 | 0 | 0 | 0 | 0 |

As it appears from the above results a significant reduction of the rating for "density of cracking" as well as for "size of cracking" after 8 weeks is observed when 5% by solids volume of the above-mentioned inorganic fibre material is incorporated in the paint composition.

### Example 4

Self-polishing Model Paint B1, B2, B3 and B4 can be prepared as follows (following the directions given above):
58%, by solids volume, of a binder comprising 50 parts by solids volume of AMPS CTMA/MMA/BA (15:40:45) salt - low M_{w} and 50 parts by solids volume of an additional binder component (see below)
2%, by solids volume, of wetting agent Disperbyk 164 (ex. Byk Chemie, Germany)
2%, by solids volume, of fumed silica Aerosil 200 (ex. Degussa, Germany)
2%, by solids volume, of modified polyethylene wax Aditix M60 X (ex. Supercolori, Italy)
36%, by solids volume, of cuprous oxide (red copper 97N premium grade ex American Chemet, USA)

### Additional binder

B1: Methyl methacrylate/n-butyl methacrylate co-polymer (Synocrii 874 SM AM-40, Cray Vally Spain - as a 60% w/w solution in Solvesso 100)
B2: Hydrocarbon resin (Novares TD 110 ex Rutgers-VFT AG, Germany)
B3: Methyl methacrylate/n-butyl methacrylate co-polymer (Neocryl B-725 ex Zeneca Resins, Holland)
B4: Vinyl chloride/vinyl isobutylether co-polymer (Laroflex MP 25 ex BASF, Germany 5% by solids volume of fibres are added to 95% by solids volume of the Model Paints B1, B2, B3, B4 in order to obtain advantageous paint compositions according to the invention.

## Claims

1. A self-polishing marine antifouling paint composition comprising
i) at least one binder co-polymer containing repeat units comprising acid-functional groups, said acid-functional groups being blocked by a blocking group, X, selected from the group consisting of monoamine groups, diamine groups, polyamine groups and quaternary ammonium groups; and
ii) fibres, said fibres having an average thickness of 1-50µm, with a ratio between the average length and the average thickness of at least 5.

2. A paint composition according to claim 1, wherein the acid-functional groups are pendant to the co-polymer backbone.

3. A paint composition according to claim 2, wherein the acid functional groups are selected from the group consisting of carboxylic acid groups and sulphonic acid groups.

4. A paint composition according to claim 3, wherein the acid functional groups are a mixture of carboxylic acid group and sulphonic acid groups.

5. A paint composition according to claim 3, wherein the acid functional groups are carboxylic acid groups.

6. A paint composition according to claim 3, wherein the acid functional groups are sulphonic acid groups.

7. A paint composition according to claim 6, wherein the repeat unit has the general formula I 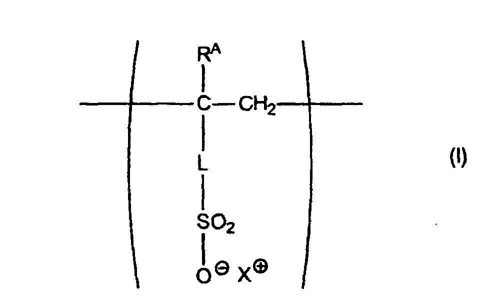 wherein
R^{A} in each individual repeat unit is independently selected from the group consisting of hydrogen and methyl;
L being a direct covalent link or a group selected from the group consisting of -(alkylene)-, -CO-O-(alkylene)-, -CO-NH-(alkylene)-, -NH-CO-(alkylene)-; -(arylene)-, -(alkylene)-(arylene), -(arylene)-(alkylene)-, -(alkylene)-O-(alkylene)-, -(alkylene)-O-(arylene)-, -(arylene)-O-(arylene)-, -(arylene)-O-(alkylene)-, alkylenoxy-, and polyalkylenoxy-groups; and
X is as defined in claim 1.

8. A paint composition according to claim 7, wherein L is selected from the group consisting of *o*-phenylene, *m*-phenylene and *p*-phenylene.

9. A paint composition according to claim 8, wherein L is *p*-phenylene.

10. A paint composition according to claim 7, wherein L is -CO-NH-C(CH₃)₂-CH₂-.

11. A paint composition according to claim 7, wherein L is -CH₂-CH₂-.

12. A paint composition according to claim 7, wherein L is -CH₂-.

13. A paint composition according to claim 7, wherein L is a direct covalent link.

14. A paint composition according to any of the preceding claims, wherein X is a monoamine.

15. A paint composition according to any of claims 1-13, wherein X is a quaternary ammonium group.

16. A paint-composition according to any of claims 1-13, wherein X is a diamine.

17. A paint composition according to any of the claims 1-13, wherein X is a polyamine.

18. A paint composition according to any of claims 7-17, wherein R^{A} is hydrogen.

19. A paint composition according to any of the preceding claims, wherein the binder co-polymer contains 1-99% by weight of the repeat units comprising acid-functional groups.

20. A paint composition according to any of the preceding claims, wherein the content of the binder co-polymer is 15-100% by solids volume of the binder system of the paint, and wherein the concentration of blocked acid functional monomers, in particular ammonium (preferably quaternary ammonium) sulphonate monomers, in the co-polymer is in the range of 3-20 mol%.

21. A paint composition according to any of the preceding claims, wherein the weight average molecular weight of the co-polymer is 1,000-150,000, such as 3,000-100,000, e.g. 5,000-60,000.

22. A marine antifouling paint composition according to any of the preceding claims, wherein the fibres are present in the paint in an amount of 0.1-25% by solids volume.

23. A marine antifouling paint composition according to claim 22, wherein the fibres are present in the paint in an amount of 1-10% by solids volume.

24. A marine antifouling paint composition according to claim 23, wherein the fibres are present in the paint in an amount of 3-8% by solids volume.

25. A marine antifouling paint composition according to any of the preceding claims, which additionally comprises at least one biologically active agent.

26. A marine antifouling paint composition according to any of the preceding claims, which additionally comprises at least one pigment, at least one dye, at least one additive and/or at least one solvent.

27. A marine antifouling paint composition according to any of the preceding claims which
i) when tested in the Rotor Test for two months (as described herein) shows a decrease with respect to "Density of cracking", "Size of cracks", "Flaked area" or "Size of flaking" of at least 1 Ranking Value Unit, preferably at least 2 Ranking Value Units, such as at least 3 Ranking Value Units, when compared to an identical test performed on the paint without fibres;
or
ii) when tested in the Blister Box Test (as described herein) for 8 weeks shows a decrease with respect to "Density of cracking", "Size of cracks", "Flaked area" or "Size of flaking" of at least 1 Ranking Value Unit, preferably at least 2 Ranking Value Units, such as at least 3 Ranking Value Units, when compared to an identical test performed on the paint without fibres.

28. A marine antifouling paint composition according to any of the preceding claims which when tested in the Rotor Test for four months (as described herein) shows a decrease with respect to "Density of cracking", "Size of cracks", "Flaked area" or "Size of flaking" of at least 1 Ranking Value Unit, preferably at least 2 Ranking Value Units, such as at least 3 Ranking Value Units, when compared to an identical test performed on the paint without fibres.

29. A marine antifouling paint composition according to any of the preceding claims, which
i) when tested in the Rotor Test for two months (as described herein) shows a Ranking Value with respect to "Size of cracks" or "Density of cracking" of at the most 1, preferably 0;
or
ii) when tested in the Rotor Test for two months (as described herein) shows a Ranking Value with respect to "Flaked area" or "Size of flaking" of at the most 1, preferably 0;
or
iii) when tested in the Blister Box Test (as described herein) for 8 weeks shows a Ranking Value with respect to "Size of cracks" or "Density of cracks" of at the most 1, preferably 0;
or
iv) when tested in the Blister Box Test (as described herein) for 8 weeks shows a Ranking Value with respect to "Flaked area" or "Size of flaking" of at the most 1, preferably 0.

30. A marine antifouling paint composition according to any of the preceding claims, which
i) when tested in the Rotor Test for four months (as described herein) shows a Ranking Value with respect to "Size of cracks" or "Density of cracking" of at the most 1, preferably 0;
or
ii) when tested in the Rotor Test for four months (as described herein) shows a Ranking Value with respect to "Flaked area" or "Size of flaking" of at the most 1, preferably 0.

31. A marine antifouling paint composition according to any of the preceding claims, where the fibres are such fibres that, when incorporated in the Model Paint Composition A (as described herein) in an amount of 5% by solids volume, and
i) when tested in the Rotor Test for two months (as described herein) shows a decrease with respect to "Size of cracks", "Density of cracking", "Flaked area" or "Size of flaking" of at least 1 Ranking Value Unit, preferably at least 2 Ranking Value Units, such as at least 3 Ranking value Units, when compared to an identical test performed on the paint without fibres;
or
ii) when tested in the Blister Box Test (as described herein) for 8 weeks shows a decrease with respect to "Size of cracks", "Density of cracking", "Flaked area" or "Size of flaking" of at least 1 Ranking Value Unit, preferably at least 2 Ranking Value Units, such as at least 3 Ranking value Units, when compared to an identical test performed on the paint without fibres.

32. A marine antifouling paint composition according to any of the preceding claims, where the fibres are such fibres that, when incorporated in the Model Paint Composition A (as described herein) in an amount of 5% by solids volume, and when tested in the Rotor Test for four months (as described herein) shows a decrease with respect to "Size of cracks", "Density of cracking", "Flaked area" or "Size of flaking" of at least 1 Ranking Value Unit, preferably at least 2 Ranking Value Units, such as at least 3 Ranking value Units, when compared to an identical test performed on the paint without fibres.

## Patentansprüche

1. Selbstpolierende marine Antifoulinganstrichzusammensetzung, umfassend
i) mindestens ein Bindemittel-Copolymer, das funktionelle Säuregruppen umfassende Wiederholungseinheiten enthält, wobei die funktionellen Säuregruppen durch eine Schutzgruppe, X, geschützt werden, die ausgewählt ist aus der Gruppe bestehend aus Monoamingruppen, Diamingruppen, Polyamingruppen und quartären Ammoniumgruppen; und
ii) Fasern, wobei die Fasern eine durchschnittliche Dicke von 1-50 µm aufweisen, mit einem Verhältnis von mindestens 5 zwischen der durchschnittlichen Länge und der durchschnittlichen Dicke.

2. Anstrichzusammensetzung nach Anspruch 1, wobei die funktionellen Säuregruppen an das Copolymer-Rückgrat angehängt sind.

3. Anstrichzusammensetzung nach Anspruch 2, wobei die funktionellen Säuregruppen ausgewählt sind aus der Gruppe bestehend aus Carbonsäuregruppen und Sulfonsäuregruppen.

4. Anstrichzusammensetzung nach Anspruch 3, wobei die funktionellen Säuregruppen eine Mischung aus Carbonsäuregruppen und Sulfonsäuregruppen sind.

5. Anstrichzusammensetzung nach Anspruch 3, wobei die funktionellen Säuregruppen Carbonsäuregruppen sind.

6. Anstrichzusammensetzung nach Anspruch 3, wobei die funktionellen Säuregruppen Sulfonsäuregruppen sind.

7. Anstrichzusammensetzung nach Anspruch 6, wobei die Wiederholungseinheit die allgemeine Formel I 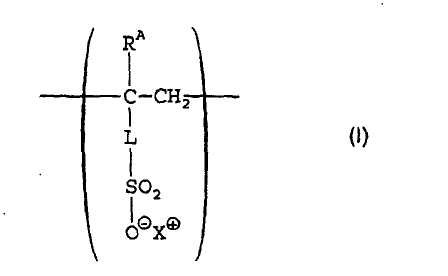 aufweist, wobei
R^{A} in jeder einzelnen Wiederholungseinheit unabhängig ausgewählt ist aus der Gruppe, bestehend aus Wasserstoff und Methyl;
L eine direkte kovalente Verknüpfung oder eine Gruppe ist, die ausgewählt ist aus der Gruppe, bestehend aus -(Alkylen)-, -CO-O-(Alkylen)-, -CO-NH-(Alkylen)-, -NH-CO-(Alkylen)-, -(Arylen)-, -(Alkylen)-(Arylen), -(Arylen )-(Alkylen)-, -(Alkylen)-O-(Alkylen)-, -(Alkylen)-O-(Arylen)-, -(Arylen)-O-(Arylen)-, -(Arylen)-O-(Alkylenr, Alkenoxy- und Polyalkylenoxygruppen; und
X wie in Anspruch 1 angegeben ist.

8. Anstrichzusammensetzung nach Anspruch 7, wobei L ausgewählt ist aus der Gruppe bestehend aus o-Phenylen, m-Phenylen und p-Phenylen.

9. Anstrichzusammensetzung nach Anspruch 8, wobei L p-Phenylen ist.

10. Anstrichzusammensetzung nach Anspruch 7, wobei L -CO-NH-C(CH₃)₂-CH₂- ist.

11. Anstrichzusammensetzung nach Anspruch 7, wobei L -CH₂-CH₂- ist.

12. Anstrichzusammensetzung nach Anspruch 7, wobei L -CH₂- ist.

13. Anstrichzusammensetzung nach Anspruch 7, wobei L eine direkte kovalente Verknüpfung ist.

14. Anstrichzusammensetzung nach einem der vorhergehenden Ansprüche, wobei X ein Monoamin ist.

15. Anstrichzusammensetzung nach einem der Ansprüche 1-13, wobei X eine quartäre Ammoniumgruppe ist.

16. Anstrichzusammensetzung nach einem der Ansprüche 1-13, wobei X ein Diamin ist.

17. Anstrichzusammensetzung nach einem der Ansprüche 1-13, wobei X ein Polyamin ist.

18. Anstrichzusammensetzung nach einem der Ansprüche 7-17, wobei R^{A} Wasserstoff ist.

19. Anstrichzusammensetzung nach einem der vorhergehenden Ansprüche, wobei das Bindemittel-Copolymer 1-99 Gewichtsprozent der funktionelle Säuregruppen umfassenden Wiederholungseinheiten enthält.

20. Anstrichzusammensetzung nach einem der vorhergehenden Ansprüche, wobei der Gehalt des Bindemittel-Copolymers 15-100% des Feststoffvolumens des Bindemittelsystems des Anstrichs beträgt; und wobei die Konzentration von blockierten Monomeren mit Säurefunktion, insbesondere Ammoniumsulfonat-(vorzugsweise quartären Ammoniumsulfonat-) Monomeren in dem Copolymer im Bereich von 3-20 Mol% liegt.

21. Anstrichzusammensetzung nach einem der vorhergehenden Ansprüche, wobei das gewichtsmittlere Molekulargewicht des Polymers 1000-150000, wie beispielsweise 3000-100000, z.B. 5000-60000, beträgt.

22. Marine Anitfoulinganstrichzusammensetzung nach einem der vorhergehenden Ansprüche, wobei die Fasem in dem Anstrich in einer Menge von 0,1-25% Feststoffvolumen zugegen sind.

23. Marine Anitfoulinganstrichzusammensetzung nach Anspruch 22, wobei die Fasem in dem Anstrich in einer Menge von 1-10% Feststoffvolumen zugegen sind.

24. Marine Anitfoulingastrichzusammensetzung nach Anspruch 23, wobei die Fasern in dem Anstrich in einer Menge von 3-8% Feststoffvolumen zugegen sind.

25. Marine Anitfoulinganstrichzusammensetzung nach einem der vorhergehenden Ansprüche, die zusätzlich mindestens ein biologisch wirksames Mittel umfaßt.

26. Marine Anitfoulinganstrichzusammensetzung nach einem der vorhergehenden Ansprüche, die zusätzlich mindestens ein Pigment, mindestens einen Farbstoff, mindestens ein Additiv und/oder mindestens ein Lösungsmittel umfaßt.

27. Marine Anitfoulinganstdchzusammensetzung nach einem der vorhergehenden Ansprüche, die,
i) wenn sie im Rotor-Test (wie hier beschrieben) für zwei Monate getestet wurde, im Vergleich zu einem identischen Test, der mit dem Anstrich ohne Fasern durchgeführt wurde, eine Abnahme in bezug auf "Rißdichte", "Rißgröße", "abgeblätterte Fläche" oder "Abblätterungsgröße" um mindestens 1 Rangwerteinheit, bevorzugt mindestens 2 Rangwerteinheiten, wie beispielsweise mindestens 3 Rangwerteinheiten, zeigt;
oder
ii) wenn sie im Blister-Box-Test (wie hier beschrieben) für 8 Wochen getestet wurde, im Vergleich zu einem identischen Test, der mit dem Anstrich ohne Fasern durchgeführt wurde, eine Abnahme in bezug auf "Rißdichte", "Rißgröße", "abgeblätterte Fläche" oder "Abblätterungsgröße" um mindestens 1 Rangwerteinheit, bevorzugt mindestens 2 Rangwerteinheiten, wie beispielsweise mindestens 3 Rangwerteinheiten, zeigt.

28. Marine Anitfoulinganstrichzusammensetzung nach einem der vorhergehenden Ansprüche, die, wenn sie im Rotor-Test (wie hier beschrieben) für vier Monate getestet wurde, im Vergleich zu einem identischen Test, der mit dem Anstrich ohne Fasern durchgeführt wurde, eine Abnahme in bezug auf "Rißdichte", "Rißgröße", "abgeblätterte Fläche" oder "Abblätterungsgröße" um mindestens 1 Rangwerteinheit, bevorzugt mindestens 2 Rangwerteinheiten, wie beispielsweise mindestens 3 Rangwerteinheiten, zeigt.

29. Marine Anitfoutinganstrichzusammenselzung nach einem der vorhergehenden Ansprüche, die,
i) wenn sie im Rotor-Test (wie hier beschrieben) für zwei Monate getestet wurde, in bezug auf "Rißgröße" oder "Rißdichte" einen Rangwert von höchstens 1, vorzugsweise 0 zeigt;
oder
ii) wenn sie im Rotor-Test (wie hier beschrieben) für zwei Monate getestet wurde, in bezug auf "abgeblätterte Fläche" oder "Abblätterungsgröße" einen Rangwert von höchstens 1, vorzugsweise 0 zeigt;
oder
iii) wenn sie im Blister-Box-Test (wie hier beschrieben) für 8 Wochen getestet wurde, in bezug auf "Rißgröße" oder "Rißdichte" einen Rangwert von höchstens 1, vorzugsweise 0 zeigt;
oder
iv) wenn sie im Blister-Box-Test (wie hier beschrieben) für 8 Wochen getestet wurde, in bezug auf "abgeblätterte Fläche" oder "Abblätterungsgröße" einen Rangwert von höchstens 1, vorzugsweise 0 zeigt.

30. Marine Anitfoulinganstrichzusammensetzung nach einem der vorhergehenden Ansprüche, die,
i) wenn sie im Rotor-Test (wie hier beschrieben) für vier Monate getestet wurde, in bezug auf "Rißgröße" oder "Rißdichte" einen Rangwert von höchstens 1, vorzugsweise 0 zeigt;
oder
ii) wenn sie im Rotor-Test (wie hier beschrieben) für vier Monate getestet wurde, in bezug auf "abgeblätterte Fläche" oder "Abblätterungsgröße" einen Rangwert von höchstens 1, vorzugsweise 0 zeigt.

31. Marine Anitfoulinganstrichzusammensetzung nach einem der vorhergehenden Ansprüche, wobei die Fasern solche Fasern sind, die, wenn sie in die Modetlanstrichzusammensetzung A In einer Menge von 5% Feststoffvolumen (wie hier beschrieben) aufgenommen sind, und die
i) wenn sie im Rotor-Test (wie hier beschrieben) für zwei Monate getestet wurde, im Vergleich zu einem identischen Test, der mit dem Anstrich ohne Fasern durchgeführt wurde, eine Abnahme in bezug auf "Rißgröße", "Rißdichte", "abgeblätterte Fläche" oder "Abblätterungsgröße" um mindestens 1 Rangwerteinheit, bevorzugt mindestens 2 Rangwerteinheiten, wie beispielsweise mindestens 3 Rangwerteinheiten, zeigt;
oder
ii) wenn sie im Blister-Box-Test (wie hier beschrieben) für 8 Wochen getestet wurde, im Vergleich zu einem identischen Test, der mit dem Anstrich ohne Fasern durchgeführt wurde, eine Abnahme in bezug auf "Rißgröße", "Rißdichte", "abgeblätterte Flächen oder "Abblätterungsgröße" um mindestens 1 Rangwerteinheit, bevorzugt mindestens 2 Rangwerteinheiten, wie beispielsweise mindestens 3 Rangwerteinheiten, zeigt.

32. Marine Anitfoulinganstrichzusammensetzung nach einem der vorhergehenden Ansprüche, wobei die Fasern solche Fasern sind, die, wenn sie in die Modellanstrichzusammensetzung A in einer Menge von 5% Feststoffvolumen (wie hier beschrieben) aufgenommen sind, und die, wenn sie im Rotor-Test (wie hier beschrieben) für vier Monate getestet wurde, im Vergleich zu einem identischen Test, der mit dem Anstrich ohne Fasern durchgeführt wurde, eine Abnahme in bezug auf "Rißgröße", "Rißdichte", "abgeblätterte Fläche" oder "Abblätterungsgröße" um mindestens 1 Rangwerteinheit, bevorzugt mindestens 2 Rangwerteinheiten, wie beispielsweise mindestens 3 Rangwerteinheiten, zeigt.

## Revendications

1. Composition de peinture antisalissure marine autopolissable comprenant :
i) au moins un copolymère liant contenant des motifs répétitifs comprenant des groupes à fonction acide, lesdits groupes à fonction acide étant séquencés par un groupe de séquençage, X, sélectionné dans le groupe constitué par des groupes monoamine, des groupes diamine, des groupes polyamine et des groupes ammonium quaternaire ; et
ii) des fibres, lesdites fibres ayant une épaisseur moyenne de 1 à 50 µm, avec un rapport d'au moins 5 entre la longueur moyenne et l'épaisseur moyenne.

2. Composition de peinture selon la revendication 1, dans laquelle les groupes à fonction acide sont latéraux par rapport au squelette du copolymère.

3. Composition de peinture selon la revendication 2, dans laquelle les groupes à fonction acide sont sélectionnés dans le groupe constitué par des groupes acide carboxylique et des groupes acide sulfonique.

4. Composition de peinture selon la revendication 3, dans laquelle les groupes à fonction acide sont un mélange de groupes acide carboxylique et de groupes acide sulfonique.

5. Composition de peinture selon la revendication 3, dans laquelle les groupes à fonction acide sont des groupes acide carboxylique.

6. Composition de peinture selon la revendication 3, dans laquelle les groupes à fonction acide sont des groupes acide sulfonique.

7. Composition de peinture selon la revendication 6, dans laquelle le motif répétitif a la formule générale : 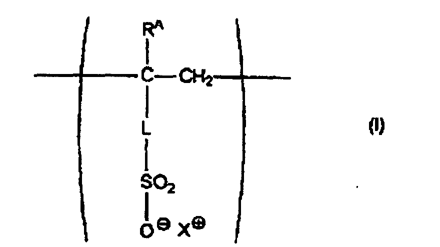 dans laquelle :
R^{A}, dans chaque motif répétitif individuel, est sélectionné indépendamment dans le groupe constitué par l'hydrogène et le méthyle ;
L étant une liaison covalente directe ou un groupe sélectionné dans le groupe constitué par -(alkylène)-, -CO-O-(alkylène)-, -CO-NH-(alkylène)-, -NH-CO-(alkylène)-, -(arylène)-, -(alkylène)-(arylène)-, -(arylène)-(alkylène)-, -(alkylène)-O-(alkylène)-, (alkylène)-O-(arylène)-, -(arylène)-O-(aryléne)-, -(arylène)-O-(alkylène)-, alkylénoxy, et polyalkylénoxy ;
X est tel que défini dans la revendication 1.

8. Composition de peinture selon la revendication 7, dans laquelle L est sélectionnée dans le groupe constitué par les *o*-phénylène, *m*-phénylène et *p*-phénylène.

9. Composition de peinture selon la revendication 8, dans laquelle L est le *p*-phénylène.

10. Composition de peinture selon la revendication 7, dans laquelle L est -CO-NH-C(CH₃)₂-CH₂-.

11. Composition de peinture selon la revendication 7, dans laquelle L est -CH₂-CH₂-.

12. Composition de peinture selon la revendication 7, dans laquelle L est -CH₂-.

13. Composition de peinture selon la revendication 7, dans laquelle L est une liaison covalente directe.

14. Composition de peinture selon l'une quelconque des revendications précédentes, dans laquelle X est une monoamine.

15. Composition de peinture selon l'une quelconque des revendications 1 à 13, dans laquelle X est un groupe ammonium quaternaire.

16. Composition de peinture selon l'une quelconque des revendications 1 à 13, dans laquelle X est une diamine.

17. Composition de peinture selon l'une quelconque des revendications 1 à 13, dans laquelle X est une polyamine.

18. Composition de peinture selon l'une quelconque des revendications 7 à 17, dans laquelle R⁴ est l'hydrogène.

19. Composition de peinture selon l'une quelconque des revendications précédentes, dans laquelle le copolymère liant contient de 1 à 99 % en poids des motifs répétitifs comprenant des groupes à fonction acide.

20. Composition de peinture selon l'une quelconque des revendications précédentes, dans laquelle la teneur en copolymère liant est de 15 à 100 % en volume de matières solides du système de liant de la peinture, et dans laquelle la concentration des monomères à fonction acide séquences, en particulier les monomères de sulfonate d'ammonium (de préférence d'ammonium quaternaire), dans le copolymère se situe dans le domaine allant de 3 à 20 % en moles.

21. Composition de peinture selon l'une quelconque des revendications précédentes, dans laquelle la masse moléculaire moyenne en poids du copolymère va de 1000 à 150 000, comme 3000 à 100 000, par exemple 5000 à 60 000.

22. Composition de peinture antisalissure marine selon l'une quelconque des revendications précédentes, dans laquelle les fibres sont présentes dans la peinture dans une quantité allant de 0,1 à 25 % en volume de matières solides.

23. Composition de peinture antisalissure marine selon la revendication 22, dans laquelle les fibres sont présentes dans la peinture dans une quantité allant de 1 à 10 % en volume de matières solides.

24. Composition de peinture antisalissure marine selon la revendication 23, dans laquelle les fibres sont présentes dans la peinture dans une quantité allant de 3 à 8 % en volume de matières solides.

25. Composition de peinture antisalissure marine selon l'une quelconque des revendications précédentes, qui comprend de plus au moins un agent biologiquement actif.

26. Composition de peinture antisalissure marine selon l'une quelconque des revendications précédentes, qui comprend de plus au moins un pigment, au moins un colorant, au moins un additif et/ou au moins un solvant.

27. Composition de peinture antisalissure marine selon l'une quelconque des revendications précédentes, qui :
i) lorsqu'elle est testée dans le test du rotor pendant deux mois (comme décrit dans la présente) montre une diminution par rapport à la « densité des craquelures », à la « taille des craquelures », à la « zone écaillée » ou à la « taille des écailles » d'au moins 1 unité de valeur de classement, de préférence d'au moins 2 unités de valeur de classement, par exemple d'au moins 3 unités de valeur de classement, par rapport à un test identique réalisé sur la peinture sans fibres ;
ou
ii) lorsqu'elle est testée dans le test de cloquage (comme décrit dans la présente) pendant 8 semaines montre une diminution par rapport à la « densité des craquelures », à la « taille des craquelures », à la « zone écaillée » ou à la « taille des écailles » d'au moins 1 unité de valeur de classement, de préférence d'au moins 2 unités de valeur de classement, par exemple d'au moins 3 unités de valeur de classement, par rapport à un test identique réalisé sur la peinture sans fibres.

28. Composition de peinture antisalissure marine selon l'une quelconque des revendications précédentes, qui, lorsqu'elle est testée dans le test du rotor pendant quatre mois (comme décrit dans la présente) montre une diminution par rapport à la « densité des craquelures », à la « taille des craquelures », à la « zone écaillée » ou à la « taille des écailles » d'au moins 1 unité de valeur de classement, de préférence d'au moins 2 unités de valeur de classement, par exemple d'au moins 3 unités de valeur de classement, par rapport à un test identique réalisé sur la peinture sans fibres.

29. Composition de peinture antisalissure marine selon l'une quelconque des revendications précédentes, qui :
i) lorsqu'elle est testée dans le test du rotor pendant deux mois (comme décrit dans la présente) montre une valeur de classement par rapport à la « taille des craquelures » ou à la « densité des craquelures'» d'au plus 1, de préférence de 0 ;
ou
ii) lorsqu'elle est testée dans le test du rotor pendant deux mois (comme décrit dans la présente) montre une valeur de classement par rapport à la « zone écaillée » ou à la « taille des écailles » d'au plus 1, de préférence de 0 ;
ou
iii) lorsqu'elle est testée dans le test de cloquage (comme décrit dans la présente) pendant 8 semaines montre une valeur de classement par rapport à la « taille des craquelures » ou à la « densité des craquelures » d'au plus 1, de préférence de 0 ;
ou
iv) lorsqu'elle est testée dans le test de cloquage (comme décrit dans la présente) pendant 8 semaines montre une valeur de classement par rapport à la « zone écaillée » ou à la « taille des écailles » d'au plus 1, de préférence de 0.

30. Composition de peinture antisalissure marine selon l'une quelconque des revendications précédentes, qui
i) lorsqu'elle est testée dans le test du rotor pendant quatre mois (comme décrit dans la présente) montre une valeur de classement par rapport à la « taille des craquelures » ou à la « densité des craquelures » d'au plus 1, de préférence de 0 ;
ou
ii) lorsqu'elle est testée dans le test du rotor pendant quatre mois (comme décrit dans la présente) montre une valeur de classement par rapport à la « zone écaillée » ou à la « taille des écailles » d'au plus 1, de préférence de 0.

31. Composition de peinture antisalissure marine selon l'une quelconque des revendications précédentes, dans laquelle les fibres sont des fibres qui, lorsqu'elles sont incorporées dans la composition de peinture modèle A (comme décrit dans la présente) dans la quantité de 5 % en volume de matières solides, et
i) lorsqu'elle est testée dans le test du rotor pendant deux mois (comme décrit dans la présente) montre une diminution par rapport à la « taille des craquelures », à la « densité des craquelures », à la « zone écaillée » ou à la « taille des écailles » d'au moins 1 unité de valeur de classement, de préférence d'au moins 2 unités de valeur de classement, par exemple d'au moins 3 unités de valeur de classement, par rapport à un test identique réalisé sur la peinture sans fibres ;
ou
ii) lorsqu'elle est testée dans le test de cloquage (comme décrit dans la présente) pendant 8 semaines montre une diminution par rapport à la « taille des craquelures », à la « densité des craquelures », à la « zone écaillée » ou à la « taille des écailles » d'au moins une 1 unité de valeur de classement, de préférence d'au moins 2 unités de valeur de classement, par exemple d'au moins 3 unités de valeur de classement, par rapport à un test identique réalisé sur la peinture sans fibres.

32. Composition de peinture antisalissure marine selon l'une quelconque des revendications précédentes, dans laquelle les fibres sont des fibres qui, lorsqu'elles sont incorporées dans la composition de peinture modèle A (comme décrit dans la présente) dans une quantité de 5 % en volume de matières solides, et lorsqu'elle est testée dans le test du rotor pendant quatre mois (comme décrit dans la présente) montre une diminution par rapport à la « taille des craquelures », à la « densité des craquelures », à la « zone écaillée » ou à la « taille des écailles » d'au moins 1 unité de valeur de classement, de préférence d'au moins 2 unités de valeur de classement, par exemple d'au moins 3 unités de valeur de classement, par rapport à un test identique réalisé sur la peinture sans fibres.
